# FASCICULE DE BREVET EUROPEEN

(11) **EP 2 472 783 B1**
(45) Date de publication et mention de la délivrance du brevet: **29.05.2013**
(21) Numéro de dépôt: 11150127.6
(22) Date de dépôt: 04.01.2011
(51) Int. Cl.: H04L 12/66

(54) **Procédé de selection de noeuds de bordure inter-domaines**
Verfahren zur Auswahl von Interdomänen-Randknoten
Method for selecting inter-domain edge nodes

(43) Date de publication de la demande: 04.07.2012
(73) Titulaire: Alcatel Lucent, 75007 Paris (FR)
(72) Inventeur: Pouyllau, Hélia, 91620, NOZAY (FR); Bui, Dinh Thai, 91620, NOZAY (FR)
(74) Mandataire: Sciaux, Edmond

(56) Documents cités:
- EP-A1- 1 758 298
- US-A1- 2005 083 936
- US-A1- 2009 161 668

## Description

### DOMAINE TECHNIQUE

La présente invention concerne un procédé de sélection de ressources réseaux de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau.

L'invention concerne également un dispositif de sélection de ressources réseaux permettant de mettre en oeuvre les étapes du procédé de sélection.

Elle trouve une application particulière dans le domaine des réseaux de communication.

### ARRIÈRE-PLAN TECHNOLOGIQUE

Dans le domaine des réseaux de communication, un premier état de la technique connu de procédé de sélection de noeuds de bordure inter-domaines, voir par exemple le document US-2009/161668, comporte les étapes de :
- Au niveau service, publier des éléments de service (appelés « Service Element » en anglais), un élément de service comprenant un service offert par un domaine pour transporter des données selon des critères de qualité déterminés QoS appelés « quality of service » en anglais ;
- Déterminer des chaînes d'éléments de service qui permettent de proposer un service demandé par un utilisateur d'un domaine du réseau de communication, une chaîne d'éléments de service permettant de définir des noeuds de bordure inter-domaines et déterminer la chaîne d'éléments de service optimale ;
- Instancier la chaîne d'éléments de service, ladite instanciation étant une phase dans laquelle chaque domaine vérifie la disponibilité des ressources par rapport à son élément de service appartenant à ladite chaine d'éléments de service ;
- Identifier les noeuds traversés au niveau réseau en calculant un objet ERO appelé en anglais « Explicite Route Object » de proche en proche à chaque noeud de bordure de la chaîne de domaine correspondant à la chaîne d'éléments de service optimale, ledit objet ERO comportant les adresses desdits noeuds de bordure. Cette étape signifie que les noeuds de chaque domaine doivent comporter une fonctionnalité de plan de contrôle (appelé en anglais « control plane »), ladite fonctionnalité s'appelant PCE « Path Computation Element » ;
- Réserver les ressources au niveau réseau pour l'activation du service réseau. Cette étape signifie que les noeuds de chaque domaine doivent comporter une fonctionnalité de plan de contrôle (appelé en anglais « control plane »), ladite fonctionnalité s'appelant RSVP-TE « Resource Reservation Protocol - Traffic Engineering ».

Les étapes du calcul de l'objet ERO et de détermination de la chaîne optimale s'effectuent par un procédé connu appelé BRPC (« backward recursive path computation »). Voir aussi le document EP-A1-1758298.

Un problème de cet état de la technique est qu'il demande un environnement homogène où tous les domaines déploient la même technologie MPLS sur un modèle Inserv, essentiellement basé sur la fonctionnalité RSVPT-TE, ce dernier supportant l'objet ERO. Or, les domaines peuvent déployer des technologies différentes selon la politique interne et sa base des technologies existantes. Cet état de la technique ne se soucie donc pas des problèmes de corrélation aux noeuds de bordure entre les différentes technologies déployées qui présentent des structures de d'information différentes.

### DESCRIPTION GENERALE

La présente invention propose un procédé de sélection de ressources réseaux de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, qui permette de résoudre les problèmes mentionnés ci-dessus.

Selon un premier aspect de l'invention, ce but est atteint par un procédé de sélection de ressources réseaux de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, le procédé comprenant les étapes de :
- au niveau de service :
   - sélectionner au moins une séquence d'éléments de service, ladite séquence satisfaisant une demande de service d'un utilisateur d'un domaine, un élément de service étant associé à un domaine et comprenant des données de qualité de service et une référence vers une pluralité de labels de service ;
   - pour chaque domaine participant à ladite séquence :
      - sélectionner des labels de service correspondant aux éléments de service de ladite séquence, un label de service comprenant les données primaires suivantes :
         - un identifiant de label de service ;
         - au moins un identifiant d'un noeud de bordure qui supporte le label de service ;
         - au moins un identifiant d'un lien d'adjacence entre ledit noeud de bordure et un noeud de bordure adjacent ;
      - effectuer une corrélation entre chacun des labels de service du domaine et les labels de service d'au moins un domaine adjacent interconnecté en fonction des données primaires des labels de service de sorte à obtenir une liste de labels de service ;
      - sélectionner un label de service parmi ladite liste ;
   - à un niveau différent du niveau de service, pour chaque domaine participant à ladite séquence, sélectionner un identifiant de ressources correspondant, ledit identifiant de ressources comprenant des données réseaux relatives à des ressources réseaux de bordure inter-domaines supportées par le noeud de bordure qui supporte le label de service sélectionné ; et
   - au niveau réseau, pour chaque domaine participant à ladite séquence, vérifier la disponibilité des ressources réseaux de bordure inter-domaines définies dans l'identifiant de ressources sélectionné et réserver lesdites ressources réseaux de bordure inter-domaines si elles sont disponibles.

Comme on va le voir en détail par la suite, le fait de définir un nouveau concept de label, à savoir le label de service et ce au niveau service permet de définir une sémantique commune pour des technologies hétérogènes utilisées dans des domaines différents tout en préservant la confidentialité des ressources réseaux de chaque domaine.

Selon des modes de réalisation non limitatifs, le procédé peut comporter en outre une ou plusieurs caractéristiques supplémentaires parmi les suivantes :
- Un label de service comporte en outre les données secondaires suivantes:
   - un type de technologie utilisée sur le noeuds de bordure ;
   - une clef de chiffrage ; et/ou
   - une date de validité ; et/ou
   - un indice de priorité ; et/ou
   - un checksum.

Ces données sont des critères supplémentaires qui peuvent être ajoutées pour l'étape de corrélation.
- Un label de service comporte en outre les données secondaires suivantes :
   - un type de technologie utilisée sur le noeud de bordure ;
   - une clef de chiffrage ; et/ou
   - une date de validité ; et/ou
   - un indice de priorité ; et/ou
   - un checksum.
- L'étape de sélection des labels de service se fait en fonction d'au moins une donnée secondaire.
- L'étape de corrélation se fait en fonction d'au moins une donnée secondaire.
- Les données réseaux d'un identifiant de ressources comprennent par exemple:
   - Un label (G)MPLS ; ou
   - Une classe Diffserv.

On notera que ces labels MPLS, GMPLS et les classes Diffserv sont définies dans les standards IETF et notamment le document RFC3032 pour le label MPLS (et notamment au §2.1), le document RFC 4328 pour le label GMPLS (et notamment aux §3.1 et 4.3), le document RFC 4594 pour les classes Diffserv (et notamment aux § 1.3, §1.5.1 à 1.5.4 et au §2.1).
- Selon un premier mode de réalisation non limitatif, l'étape de corrélation est effectuée de manière distribuée au niveau de chaque domaine participant à une séquence d'éléments de service.
- Selon ce premier mode de réalisation, dans une variante de réalisation non limitative, lequel l'étape de corrélation comporte, au niveau de chaque domaine :
   - recevoir un label de service d'un domaine adjacent suivant ;
   - identifier les noeuds de bordure de sortie du domaine connectés aux noeuds de bordure d'entrée du domaine adjacent suivant qui supportent ledit label de service ;
   - identifier les labels de service supportés par les noeuds de bordure de sortie identifiés ;
   - identifier les noeuds de bordure d'entrée du domaine pour lesquels un chemin existe avec les noeuds de bordure de sortie identifiés dudit domaine ;
   - identifier les labels de service supportés par les noeuds de bordure d'entrée identifiés ;
   - transmettre lesdits labels de service identifiés au domaine adjacent précédent.
- Selon un deuxième mode de réalisation non limitatif, l'étape de corrélation est effectuée de manière centralisée au niveau d'une tierce partie qui connaît l'ensemble des éléments de service des différents domaines du réseau de communication et les interconnexions entre les domaines dudit réseau de communication.
- Selon ce deuxième mode de réalisation, selon une variante de réalisation non limitative, l'étape de corrélation s'effectue sur l'ensemble des domaines participant à une séquence d'éléments de service et entre chacun des labels de service d'un noeud de bordure de sortie d'un domaine et chacun des labels de service d'un noeud d'entrée adjacent d'au moins un domaine adjacent interconnecté auquel le noeud de bordure de sortie est connecté.

En outre, il est également proposé un dispositif de sélection de ressources de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, le dispositif étant adapté pour :
- au niveau de service :
   - sélectionner une séquence d'éléments de service, ladite séquence satisfaisant une demande de service d'un utilisateur d'un domaine, un élément de service étant associé à un domaine et comprenant des données de qualité de service et une référence vers une pluralité de labels de service ;
   - pour chaque domaine participant à ladite séquence :
      - sélectionner des labels de service correspondant aux éléments de service de ladite séquence, un label de service comprenant les données primaires suivantes :
         - un identifiant de label de service ;
         - au moins un identifiant d'un noeud de bordure qui supporte le label de service ;
         - au moins un identifiant d'un lien d'adjacence entre ledit noeud de bordure et un noeud de bordure adjacent ;
      - effectuer une corrélation entre chacun des labels de service du domaine et les labels de service d'au moins un domaine adjacent interconnecté en fonction des données primaires des labels de service de sorte à obtenir une liste de labels de service ;
      - sélectionner un label de service parmi ladite liste ;
   - à un niveau différent du niveau de service, pour chaque domaine participant à ladite séquence, sélectionner un identifiant de ressources correspondant, ledit identifiant de ressources comprenant des données réseaux relatives à des ressources réseaux de bordure inter-domaines supportées par le noeud de bordure qui supporte le label de service sélectionné; et
   - au niveau réseau, pour chaque domaine participant à ladite séquence, vérifier la disponibilité des ressources réseaux de bordure inter-domaines définies dans l'identifiant de ressources sélectionné et réserver lesdites ressources réseaux de bordure inter-domaines si elles sont disponibles.

Selon un premier mode de réalisation non limitatif, le dispositif est composé d'un élément de gestion d'un domaine.

Selon un deuxième mode de réalisation non limitatif, le dispositif est composé d'un élément de gestion d'une tierce partie qui connaît l'ensemble des éléments de service des différents domaines du réseau de communication et les interconnexions entre les domaines dudit réseau de communication.

En outre, il est également proposé un réseau de communication pour la sélection de ressources réseaux de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, ledit réseau de communication comprenant :
- une pluralité de domaines ;
- et au moins un dispositif de sélection selon l'une quelconque des caractéristiques précédentes.

En outre, il est également proposé un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes, lorsqu'il est chargé sur un ordinateur.

En outre, selon un deuxième aspect de l'invention, ce but est atteint par un procédé de sélection de ressources réseaux de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, le procédé comprenant les étapes de, pour chaque domaine :
- au niveau de service :
   - recevoir un label de service du domaine sélectionné par un domaine adjacent précédent ;
   - sélectionner au moins un élément de service correspondant audit label de service reçu, un élément de service étant associé à un domaine et comprenant des données de qualité de service et une référence vers une pluralité de labels de service ;
   - sélectionner les labels de service qui correspondent à cet élément de service, un label de service comprenant les données primaires suivantes :
      - un identifiant de label de service ;
      - au moins un identifiant d'un noeud de bordure qui supporte le label de service ;
      - au moins un identifiant d'un lien d 'adjacence entre ledit noeud de bordure et un noeud de bordure adjacent ;
   - effectuer une corrélation entre chacun des labels de service et les labels de service d'au moins un domaine adjacent interconnecté en fonction des données primaires dat1 des labels de service de sorte à obtenir une liste de labels de service ;
   - sélectionner un label de service parmi ladite liste ;
- à un niveau différent du niveau de service, pour chaque domaine, sélectionner un identifiant de ressources correspondant, ledit identifiant de ressources comprenant des données réseaux relatives à des ressources réseaux de bordure inter-domaines supportées par le noeud de bordure qui supporte le label de service sélectionné ; et
- au niveau réseau, pour chaque domaine, vérifier la disponibilité des ressources réseaux de bordure inter-domaines définies dans l'identifiant de ressources sélectionné et réserver lesdites ressources réseaux de bordure inter-domaines si elles sont disponibles.

Selon des modes de réalisation non limitatifs, le procédé peut comporter en outre une ou plusieurs caractéristiques supplémentaires parmi les suivantes.
- Un label de service comporte en outre les données secondaires suivantes:
   - un type de technologie utilisée sur le noeud de bordure ;
   - une clef de chiffrage ; et/ou
   - une date de validité ; et/ou
   - un indice de priorité ; et/ou
   - un checksum.

Dans un mode de réalisation non limitatif, le procédé de sélection comporte en outre une étape supplémentaire de, pour tous les domaines différents de transmettre ledit label de service sélectionné au domaine adjacent.

Dans un mode de réalisation non limitatif, au niveau du domaine source, le procédé de sélection comporte les étapes suivantes :
- au niveau de service :
   - sélectionner au moins un élément de service satisfaisant à une demande de service, un élément de service étant associé à un domaine et comprenant des données de qualité de service et une référence vers une pluralité de labels de service ;
   - sélectionner les labels de service qui correspondent à cet élément de service, un label de service comprenant les données primaires suivantes :
      - un identifiant de label de service ;
      - au moins un identifiant d'un noeud de bordure qui supporte le label de service ;
      - au moins un identifiant d'un lien d 'adjacence entre ledit noeud de bordure et un noeud de bordure adjacent ;
   - effectuer une corrélation entre chacun des labels de service et les labels de service d'au moins un domaine adjacent interconnecté en fonction des données primaires des labels de service de sorte à obtenir une liste de labels de service ;
   - sélectionner un label de service parmi ladite liste ;
   - transmettre ledit label de service sélectionné au domaine adjacent.
- à un niveau différent du niveau de service, pour chaque domaine, sélectionner un identifiant de ressources correspondant, ledit identifiant de ressources comprenant des données réseaux relatives à des ressources réseaux de bordure inter-domaines supportées par le noeud de bordure qui supporte le label de service sélectionné ; et
- au niveau réseau, pour chaque domaine, vérifier la disponibilité des ressources réseaux de bordure inter-domaines définies dans l'identifiant de ressources sélectionné et réserver lesdites ressources réseaux de bordure inter-domaines si elles sont disponibles.

En outre, il est également proposé un dispositif de sélection de ressources de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, le dispositif étant adapté pour :
- au niveau de service :
   - sélectionner au moins un élément de service satisfaisant à une demande de service, un élément de service étant associé à un domaine et comprenant des données de qualité de service et une référence vers une pluralité de labels de service ;
   - sélectionner les labels de service qui correspondent à cet élément de service, un label de service comprenant les données primaires suivantes :
      - un identifiant de label de service ;
      - au moins un identifiant d'un noeud de bordure qui supporte le label de service ;
      - au moins un identifiant d'un lien d 'adjacence entre ledit noeud de bordure et un noeud de bordure adjacent ;
   - effectuer une corrélation entre chacun des labels de service et les labels de service d'au moins un domaine adjacent interconnecté en fonction des données primaires des labels de service de sorte à obtenir une liste de labels de service ;
   - sélectionner un label de service parmi ladite liste ;
   - transmettre ledit label de service sélectionné au domaine adjacent.
- à un niveau différent du niveau de service, pour chaque domaine, sélectionner un identifiant de ressources correspondant, ledit identifiant de ressources comprenant des données réseaux relatives à des ressources réseaux de bordure inter-domaines supportées par le noeud de bordure qui supporte le label de service sélectionné ; et
- au niveau réseau, pour chaque domaine, vérifier la disponibilité des ressources réseaux de bordure inter-domaines définies dans l'identifiant de ressources sélectionné et réserver lesdites ressources réseaux de bordure inter-domaines si elles sont disponibles.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig. 1 est un organigramme d'un mode de réalisation non limitatif du procédé de sélection selon un premier aspect de l'invention ;
- La Fig. 2 est une représentation schématique du contenu d'un label de service utilisé par le procédé de sélection de la Fig. 1 ;
- La Fig. 3 est une représentation schématique du contenu d'un élément de service utilisé par le procédé de sélection de la Fig. 1 ;
- La Fig. 4 est une représentation schématique du contenu d'un identifiant de ressources utilisé par le procédé de sélection de la Fig. 1 ;
- La Fig. 5a illustre schématiquement un réseau de communication comprenant des domaines divisés en trois niveaux logiques dans lequel le procédé de sélection de la Fig. 1 est mis en oeuvre ;
- La Fig. 5b illustre schématiquement un réseau de communication dans un exemple non limitatif comprenant deux domaines dans lequel le procédé de sélection de la Fig. 1 est mis en oeuvre ;
- La Fig. 6 est un schéma explicatif de la mise en oeuvre de manière centralisée d'une étape de corrélation du procédé de sélection de la Fig. 1 entre labels de service de différents domaines ;
- La Fig. 7 est un premier schéma explicatif de la mise en oeuvre de manière distribuée d'une étape de corrélation du procédé de sélection de la Fig. 1 entre labels de service de différents domaines ;
- La Fig. 8a est un organigramme explicatif de la mise en oeuvre de l'étape de corrélation de la Fig. 7 selon un premier mode de réalisation non limitatif ;
- La Fig. 8b est un organigramme explicatif de la mise en oeuvre de l'étape de corrélation de la Fig. 7 selon un deuxième mode de réalisation non limitatif ;
- La Fig. 9 est un deuxième schéma explicatif de la mise en oeuvre de l'étape de corrélation de la Fig. 7 ;
- La Fig. 10 est un schéma simplifiée d'un dispositif de mise en oeuvre du procédé de sélection de la Fig. 1 ;
- La Fig. 11 est un organigramme d'un mode de réalisation non limitatif du procédé de sélection selon un deuxième aspect de l'invention ;
- La Fig. 12 est un est un schéma explicatif de la mise en oeuvre d'une étape de corrélation du procédé de sélection de la Fig. 11 entre labels de service de différents domaines ; et
- La Fig. 13 est un schéma simplifiée d'un dispositif de mise en oeuvre du procédé de sélection de la Fig. 11.

### DESCRIPTION DE MODES DE REALISATION DE L'INVENTION

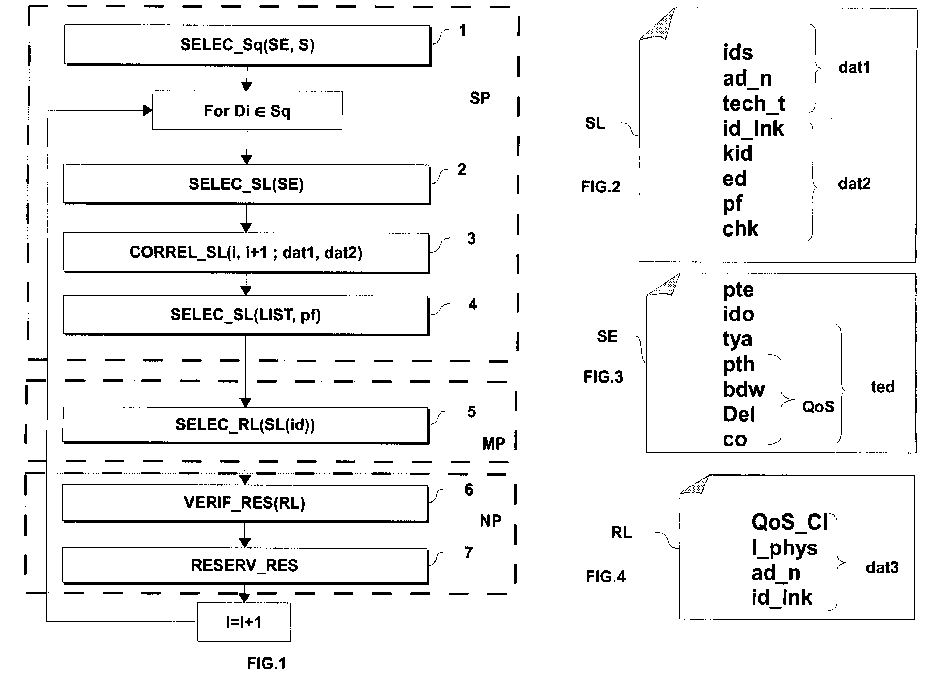

Le procédé de sélection de ressources réseaux de bordure inter-domaines d'un réseau de communication ntw, un domaine D étant sous la responsabilité d'un opérateur unique et comprenant une pluralité de noeuds no dont au moins un noeud de bordure b_no, les domaines étant divisés en au moins trois niveaux dont un niveau de service SP, un niveau de supervision MP et un niveau réseau NP, est décrit dans un mode de réalisation non limitatif à la Fig. 1.

Par opérateur «appelé en anglais « carrier », on entend une entité administrative gérant et exploitant un réseau de télécommunication et/ou de transport de données informatiques.

Dans la description, on utilisera indifféremment le terme ressources réseaux de bordure inter-domaines ou ressources réseaux.

Il est mis en oeuvre dans un réseau de communication ntw comportant une pluralité de domaines D.

On notera qu'un domaine D qui est sous la responsabilité d'un opérateur unique utilisé pour le transport d'un service inter-domaines, et que l'on peut appeler « carrier-domain », est différent d'un domaine tel que défini par l'IETF « Internet Engineering Task Force » qui peut être dans des exemples non limitatifs un domaine AS (appelé en anglais « Autonomous System », un domaine de routage IGP (appelé en anglais « Interior Gateway Protocol ») ou encore un réseau de recouvrement GMPLS (appelé en anglais « Generalized Multi-Protocol Label Switching overlay network »). Un domaine D sous la responsabilité d'un opérateur unique peut comprendre une pluralité de domaines IETF.

Dans un mode de réalisation non limitatif, un noeud de bordure est un router ou encore un commutateur Ethernet.

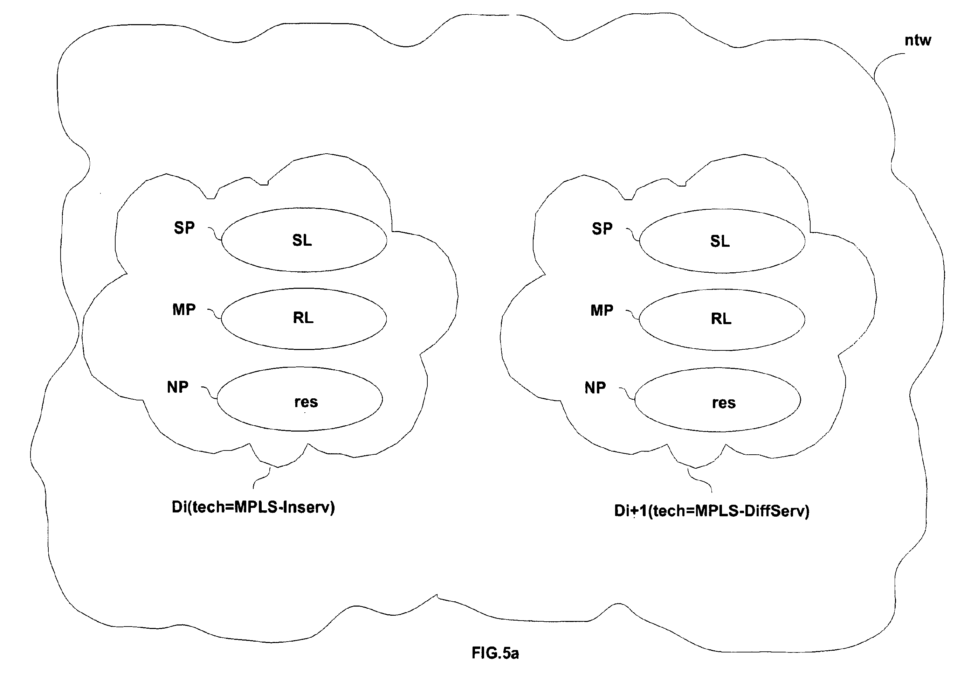

Dans un exemple non limitatif, par souci de simplification, le réseau de communication ntw tel qu'illustré à la Fig. 5a comporte deux domaines Di et Di+1.

Chaque domaine D utilise un protocole de communication de données tech particulier.

Un domaine D se décompose en trois niveaux logiques :
- un niveau de service SP
- un niveau de supervision MP
- un niveau réseau RP

Le niveau de service SP (appelé « Service Management » en anglais) permet de définir, composer, publier, instancier, activer, faire la maintenance et facturer les services inter-domaines et intra-domaines.

Le niveau de supervision/gestion MP (appelé « Network Management » en anglais) permet de configurer et surveiller l'état du réseau.

Le niveau réseau RP comprend le plan réseau de données (appelé en anglais « network data plane ») et le plan de contrôle réseau (appelé en anglais « network control plane » :
- le plan de contrôle/commande réseau comprend les protocoles de contrôle et signalisation qui permettent la mise en place, l'entretien et la fermeture des connexions réseau. Il inclut également les protocoles de routage incluant les tables de routage (appelées en anglais « routing tables ») tels que dans des exemples non limitatifs OSPF (« Open Shortest Path First », BGP (« Border Gateway Protocol »), etc.
- le plan réseau de données comprend les tables d'acheminement ou d'expédition (appelées en anglais « network node forwarding tables ») ;

Si on prend la nomenclature du modèle de protocole TMN « Telecommunications Management Network » défini par l'ITU-T « International Telecommunication Union» dans les « Recommendation series M.3000 », on aura les correspondances suivantes :
- le niveau service SP correspond au niveau SM (« Service Management ») intra-domaine plus la partie contrôle du service inter-domaine définis par le TMN;
- le niveau supervision MP correspond au niveau NM (« Network Management ») défini par le TMN ;
- le niveau réseau NP correspond au niveau NDP (« Network Data Plane ») qui gère les tables d'acheminement plus le niveau NCP (« Network Control Plane ») définis par le TMN.

Au niveau service, des éléments de service SE et des labels de service SL sont définis.

Un élément de service SE comprend des données de trafic intra-domaine (appelées en anglais « Traffic engineering information ») et comprend ainsi dans un mode de réalisation non limitatif :
- un identifiant de l'opérateur ido (opérateur appelé « carrier » en anglais) qui propose cet élément de service SE ;
- le type de service applicatif proposé tya ;
- des données de qualité de service proposée QoS. Dans un exemple non limitatif les données sont la bande passante bdw, le délai del, le coût co d'un chemin, les canaux de transmission attribués pour le service applicatif etc. ;
- le chemin pth intra-domaine entre deux noeuds de bordure pour lequel les paramètres de QoS sont garantis ; etc.

Par ailleurs, un élément de service SE comprend une référence pte vers une pluralité de labels de service SL.

Un label de service SL permet de définir les critères qui vont être appliqués pour l'étape de corrélation (décrite plus loin). Un label de service SL comprend ainsi dans un mode de réalisation non limitatif les données primaires suivantes dat1 :
- un identifiant de label de service ids ;
- au moins un identifiant ad_n d'un noeud de bordure qui supporte le label de service ;
- au moins un identifiant id_Ink d'un lien d'adjacence entre ledit noeud de bordure et un noeud de bordure adjacent, ce dernier appartenant au domain adjacent.

Au niveau de supervision MP, des identifiants de ressources RL sont définis. Au moins un identifiant de ressources RL est associé à un label de service SL.

Ces identifiants de ressources RL permettent de définir les caractéristiques des ressources réseaux qui sont proposées par le domaine D associé.

Ils comprennent les données réseaux suivantes dat3 :
- l'identifiant ad_n du noeud de bordure qui supporte le label de service SL correspondant ;
- ledit au moins un identifiant id_Ink d'un lien d'adjacence entre deux noeuds qui supporte le label de service SL ;
- l'identifiant ids de label de service correspondant SL ;
- les caractéristiques des ressources réseaux proposées par le domaine D telles que dans des exemples non limitatifs :
   - l'interface physique ou logique utilisée telle que le numéro du port utilisé et/ou ;
   - la classe de QoS (dans le cas par exemple d'une technologie MPLSDIffServ); et/ou
   - les buffers utilisés ; et/ou
   - le CPU consommé etc.

On notera qu'une interface logique est une interface agrégée composée d'une partie de plusieurs interfaces physiques.

On notera qu'un lien d'adjacence est un lien de communication logique (par exemple un lien agrégé constitué de multiples liens physiques) ou un lien de communication physique reliant directement (i.e. nombre de bond, appelé en anglais « hop », égal à un) deux noeuds de bordure dans une interconnexion entre deux domaines adjacents.

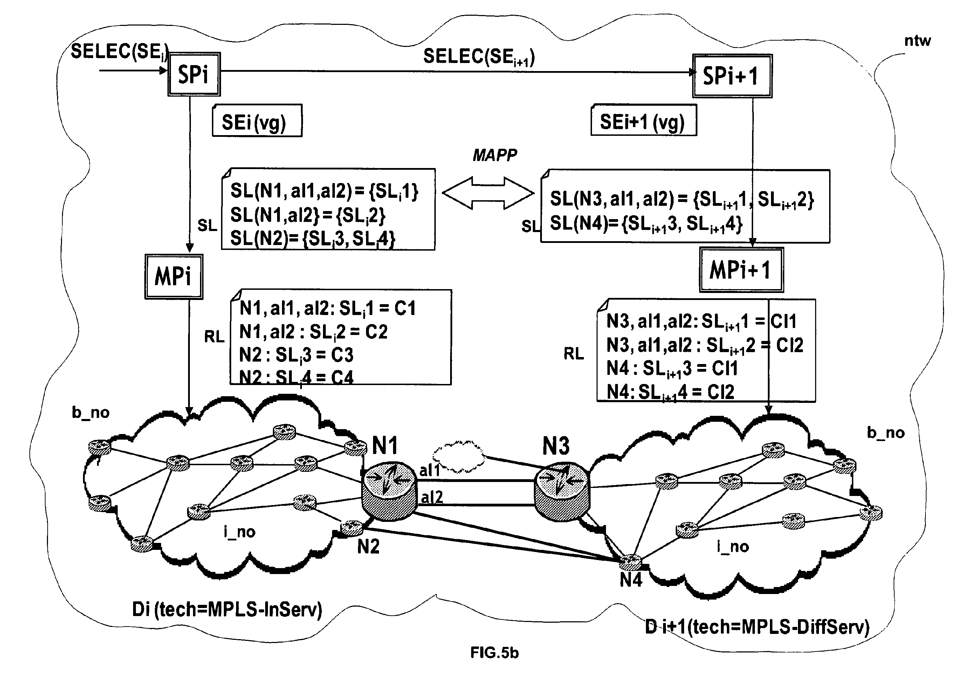

Ainsi, dans l'exemple illustré à la figure 5b, les deux domaines Di et Di+1 utilisent le même protocole de communication de données MPLS-Diffserv appelée en anglais «MuItiProtocol Label Switching-Differentiated Services». Par ailleurs, chaque domaine comprend une pluralité de noeuds de bordure b_no et une pluralité de noeuds intra-domaine i_no.

Les noeuds de bordure b no d'un domaine sont reliés à des noeuds de bordure d'un domaine adjacent par des liens d'adjacence al.

Ainsi, le premier domaine Di comprend deux noeuds de bordure N1 et N2 et le deuxième domaine Di+1 comprend deux noeuds de bordure N3, N4. Le noeud de bordure N1 est connecté :
- au noeud de bordure N3 par deux liens d'adjacence al1 et al2,
- au noeud de bordure N4 par un lien d'adjacence (non dénommé)

Le noeud de bordure N2 est connecté au noeud de bordure N4 par un lien d'adjacence (non dénommé).

En outre, le domaine Di propose :
- au niveau service SPi un SE comprenant un service applicatif tya qui est un jeu video vg
- au niveau service SPi quatre SL :
   - SLi1=N1, al1, al2
   - SLi2=N1, al2
   - SLi3 = N2
   - SLi4 = N2
- au niveau de supervision MPi quatre RL :
   - RLi1=N1, al1, al2 : SLi1 = Ca
   - RLi2=N1, al2 : SLi2 = Cb
   - RLi3 = N2 : SLi3 = Cc
   - RLi4 = N2 : SLi4 = Cd

Avec Ca, Cb, Cc, Cd, indiquant des ressources de réseaux particulières associées aux liens d'adjacence définis précédemment, et qui permettent d'assurer l'acheminent des données en respectant les contraintes QoS engagées par l'opérateur à travers ledit SE.

Par souci de simplification, toutes les données dat1, dat2 et dat3 n'ont pas été représentées sur les figures.

De plus, par souci de simplification, tous les liens d'adjacence entre les noeuds de bordure n'ont pas été représentés sur les figures.

Le domaine Di+1 propose :
- au niveau service SPi un SE comprenant un service applicatif tya qui est un jeu video vg
- au niveau service SPi+1 quatre SL :
   - SLᵢ₊₁1=N3, al1, a12, avec deux liens d'adjacence al1, al2
   - SLᵢ₊₁2=N3, al1, a12, avec deux liens d'adjacence al1, al2
   - SLᵢ₊₁3 = N4
   - SLᵢ₊₁4 = N4
- au niveau de supervision MPᵢ₊₁ quatre RL :
   - RLᵢ₊₁1=N3, al1, a12: SLᵢ₊₁1 = Cl1
   - RLᵢ₊₁2=N3, al2 : SLᵢ₊₁2 = Cl2
   - RLᵢ₊₁3 = N4 : SLᵢ₊₁3 = Cl1
   - RLᵢ₊₁4 = N4 : SLᵢ₊₁4 = Cl2

Avec Cl1 et Cl2 deux classes de DiffServ différentes. On rappelle qu'une classe permet un traitement particulier au niveau du noeud de bordure. Elle défini ainsi des ressources (dans un exemple non limitatif, nombre de buffers de données, taille des buffers de données, queue d'attente dédié, pourcentage de CPU utilisé etc.) pour les données transmises du service demandé S.

Afin de mettre en oeuvre un service applicatif de bout en bout tya, tel qu'un jeu vidéo dans un exemple non limitatif, le procédé de sélection de ressources réseaux de bordure inter-domaines d'un réseau de communication ntw est mis en oeuvre.

Il comporte les étapes suivantes, telles qu'illustrées à la Fig. 1 :
- au niveau de service SP :
   - sélectionner une séquence Sq d'éléments de service SE, ladite séquence Sq satisfaisant une demande de service S d'un utilisateur d'un domaine D, un élément de service SE étant associé à un domaine D et comprenant des données de qualité de service QoS et une référence pte vers une pluralité de labels de service SL (étape SELEC_Sq(SE, S) ;
   - pour chaque domaine D participant à ladite séquence Sq :
      - sélectionner des labels de service SL correspondant aux éléments de service SE de ladite séquence Sq (étape SELEC_SL(SE)), un label de service SL comprenant les données primaires suivantes dat1 :
      - un identifiant de label de service ids ;
      - au moins un identifiant ad_n d'un noeud de bordure qui supporte le label de service ;
      - au moins un identifiant id_Ink d'un lien d 'adjacence entre ledit noeud de bordure et un noeud de bordure adjacent ;
   - effectuer une corrélation entre chacun des labels de service SLi du domaine Di et les labels de service SLi+1 d'au moins un domaine adjacent interconnecté Di+1 en fonction des données primaires dat1 des labels de service SL de sorte à obtenir une liste LIST de labels de service SLi ; (étape CORREL_SL(i,i+1, dat1, dat2)) ;
   - sélectionner un label de service SL parmi ladite liste LIST (étape SELEC_SL(LIST, pf) ;
- à un niveau différent du niveau de service, pour chaque domaine D participant à ladite séquence Sq, sélectionner un identifiant de ressources correspondant RL, ledit identifiant de ressources RL comprenant des données réseaux dat3 relatives à des ressources réseaux de bordure inter-domaines res supportées par le noeud de bordure b_no qui supporte le label de service sélectionné SL (étape .SELEC_RL(SL(id)) ;
- au niveau réseau NP, pour chaque domaine D participant à ladite séquence Sq, vérifier la disponibilité des ressources réseaux de bordure inter-domaines res définies dans le identifiant de ressources sélectionné RL et provisionner lesdites ressources réseaux de bordure inter-domaines res si elles sont disponibles (étapes VERIF_RES(RL) et RESERV_RES).

Ainsi, les étapes du procédé de sélection sont décrites en détail ci-après en se référant aux figures 1 à 9.

On notera que dans une étape initiale non représentée, les labels de service SL sont définis et publiés par chaque domaine D.

Dans un mode de réalisation non limitatif, en mode centralisé, chaque domaine D publie ses labels de service SL à une tierce partie AI. Dans un exemple non limitatif, la publication s'effectue en même temps que celle de ses éléments de service SE.

Dans un mode de réalisation non limitatif, en mode distribué, chaque domaine D publie ses labels de service à ses domaines adjacents. Dans un exemple non limitatif, la publication s'effectue en même temps que celle ses éléments de service SE.

**Dans une première étape 1)**, au niveau de service SP, on sélectionne au moins une séquence Sq d'éléments de service SE, ladite séquence Sq satisfaisant une demande de service S d'un utilisateur d'un domaine D, un élément de service SE étant associé à un domaine D et comprenant des données de qualité de service QoS et une référence pte vers une pluralité de labels de service SL.

Dans un mode de réalisation non limitatif, on sélectionne une pluralité de séquences Sq. Le fait d'avoir plusieurs séquences augmente la probabilité de succès, car en cas d'échec de trouver une route bout à bout (« end to end ») dans la 1 ère séquence, on pourrait regarder la 2ème séquence, etc. On notera qu'il peut en effet y avoir plusieurs séquences Sq possibles qui satisfont des contraintes QoS du service demandé S. dans ce cas, on les classera dans un ordre en fonction de métriques déterminées, tel que dans des exemples non limitatifs, un coût, un critère d'optimalité etc. Le classement s'effectuera au niveau d'une tierce partie ou au niveau de chaque domaine.

Dans un exemple de réalisation non limitatif, la référence pte est un pointeur vers un ou plusieurs labels de service SL.

Ainsi, la sélection des éléments de service SE permet de définir les chemins intra-domaine qui satisfont aux contraintes du service demandé S.

On notera que les éléments de service SE d'une séquence Sq appartiennent à différents domaines D. Ces domaines participent ainsi à ladite séquence Sq via les éléments de service SE qu'ils proposent pour satisfaire la demande de service S. Ils font donc partie d'une chaîne de domaines Sd qui participe à ladite séquence Sq.

Dans l'exemple illustré à la Fig. 5, la séquence (appelée également chaîne) Sq comporte entre autre les éléments de service SEi et SEi+1.

Par la suite, au niveau de service SP, pour chaque domaine D participant à ladite séquence Sq, on effectue les étapes suivantes.

**Dans une deuxième étape 2)**, on sélectionne des labels de service SL correspondant aux éléments de service SE de ladite séquence Sq, un label de service SL comprenant les données primaires suivantes dat1 :
- un identifiant de label de service ids ;
- au moins un identifiant ad_n d'un noeud de bordure qui supporte le label de service ;
- l'identifiant id_Ink d'un lien d 'adjacence entre ledit noeud de bordure et un noeud de bordure adjacent.

On notera que cette sélection fait suite à une requête d'instanciation INST_REQ envoyée par un domaine appelé domaine source à partir duquel une demande de service S est demandée. Cette requête d'instanciation REQ_INST comporte un identifiant SID de la demande de service S et le ou les éléments de service SE correspondant à chaque domaine qui satisfait à la séquence Sd trouvée à l'étape précédente.

Dans un mode de réalisation non limitatif, l'identifiant de label de service ids permet :
- d'identifier le label de service SL ;
- d'indexer les données réseaux décrivant les ressources réseaux res et donc de retrouver l'identifiant de ressources RL correspondant.

On notera que dans le cas où il existe une pluralité d'identifiants ressources RL correspondant, le domaine sélectionne un identifiant de ressources RL parmi ladite pluralité selon une politique interne au domaine.

L'identifiant ad_n permet de déterminer quels sont le ou les noeuds de bordure qui sont concernés par les ressources réseaux décrites dans l' identifiant de ressources RL correspondant audit label de service SL. Dans un mode de réalisation non limitatif, l'identifiant d'un noeud de bordure est une adresse dudit noeud de bordure.

Dans un mode de réalisation non limitatif, un label de service SL comporte en outre les données secondaires suivantes dat2, tel qu'illustré sur la Fig. 2 :
- un type de technologie utilisée tech_t sur le noeud de bordure ; et/ou
- une clef de chiffrage kid ; et/ou
- une date de validité ed ; et/ou
- un indice de priorité pf ; et/ou
- un checksum chk.

Le type de technologie tech_t permet de savoir quelle est la technologie de communication supportée par le ou les noeuds de bordures associés au label de service SL. On entend par technologie de communication, un ensemble de protocoles et de fonctionnalités réseaux déployés.

Dans un mode de réalisation non limitatif, le type de technologie tech_t est défini comme un type générique de sorte à préserver la confidentialité de la technologie déployée dans le domaine concerné D. Ce type générique permet de ne pas référencer le type de technologie utilisée. Dans ce cas, l'étape de corrélation (décrite plus loin) se réalise sans préférence sur la technologie déployée. On notera que dans ce cas, les technologies intra-domaines peuvent être, dans ce cas, différentes entre les 2 domaines adjacents, mais la technologie utilisée est identique des deux côtés de l'interconnexion inter-domaine (entre deux noeuds de bordure).

La clef de chiffrage kid permet de chiffrer les données réseaux dat3 décrivant les ressources res.

Dans un mode de réalisation non limitatif, la clef de chiffrage permet d'indexer les données réseaux dat3 décrivant les ressources réseaux res. La date de validité ed permet d'indiquer la date de validité d'un label de service SL.

L'indice de priorité pf permet à un domaine de fournir une liste de labels de service SL dans un ordre de préférence. Ainsi, s'il existe plusieurs labels de service SL pour lesquels la corrélation (décrite ci-dessous) est positive, l'opérateur du domaine pourra faire une sélection selon cet indice pf.

Le checksum chk permet de préserver l'intégrité des données du label de service SL.

Dans un mode de réalisation non limitatif, un label de service SL peut être implémenté sous la forme d'un schéma XML (« Extensible Markup Language » en anglais) selon un fichier de description de structure XSD (« XML Schema Definition » en anglais) suivant.

```
 <xs:complexType name="ServiceLabel">
 <xs:attribute name="ids" type="xs:string" use="required"/>
   <xs:attribute name="ad_n" type="xs:string" use=" required"/>
  <xs:attribute name="tech_t" type="xs:string" use="optional"/>
   <xs:attribute name="kid" type="xs:string" use="optional"/>
   <xs:attribute name="ed" type="xs:dateTime" use="optional"/>
   <xs:attribute name="pf" type="xs:decimal" use="optional"/>
   <xs:attribute name="chk" type="xs:string" use="optional"/>
   <xs:sequence>
     <xs:element name=" id_Ink " type="xs:string"
     minOccurs="1"/>
  </xs:sequence>
 </xs:complexType>
```

On notera que bien entendu, dans une étape antérieure les labels de service SL ont été définis par chaque opérateur unique de chaque domaine D avant ou en même temps que leur publication.

Dans un mode de réalisation non limitatif, l'étape de sélection est effectuée en outre en fonction de données secondaires dat2 décrites ci-dessus et notamment en fonction :
- du type de technologie tech_t utilisée sur le noeud de bordure ; et/ou
- de l'indice de priorité pf ; et/ou
- de la clef de chiffrage kid lorsque cette dernière indexe les données réseaux dat3 décrivant les ressources res.

On notera que le type de technologie tech_t utilisée sur le noeud de bordure représente ici le type de technologie intra-domaine.

**Dans une troisième étape 3)**, on effectue une corrélation entre chacun des labels de service SLi du domaine Di et les labels de service SLi+1 d'au moins un domaine adjacent interconnecté Di+1 en fonction des données primaires dat1 des labels de service SL de sorte à obtenir une liste LIST de labels de service SLi. L'étape de corrélation est appelée en anglais « mapping ».

Dans un mode de réalisation non limitatif, l'étape de corrélation est effectuée en outre en fonction de données secondaires dat2 décrites précédemment et notamment en fonction :
- du type de technologie tech_t utilisée sur le noeud de bordure ; et/ou
- de l'indice de priorité pf ; et/ou
- de la clef de chiffrage kid lorsque cette dernière indexe les données réseaux dat3 décrivant les ressources res.

On notera que lorsque le type de technologie tech_t est générique l'étape de corrélation se réalise sans préférence sur la technologie déployée. Cette donnée primaire tech_t n'est ainsi pas prise en compte.

Tel qu'illustré sur l'exemple non limitatif de la Fig. 5, deux domaines Di et Di+1 sont représentés. Le premier domaine Di comporte deux noeuds de bordure N1 et N2 qui sont connectés respectivement aux noeuds de bordure N3 et N4 pour le premier noeud N1, et N4 pour le deuxième noeud N2.

Le domaine Di propose les quatre labels de service SLi1, SLi2 et SLi3, SLi4 déjà décrits précédemment.

Les labels de service SLi1, SLi2 sont supportés par le noeud de bordure N1 tandis que les labels de service SLi3 et SLi4 sont supportés par le noeud de bordure N2.

Le domaine Di+1 propose les quatre labels de service SLᵢ₊₁1, SLᵢ₊₁2, SLᵢ₊₁3 et SLᵢ₊₁4 déjà décrits précédemment.

Les labels de service SLᵢ₊₁1, SLᵢ₊₁2 sont supportés par le noeud de bordure N3 tandis que les labels de service SLᵢ₊₁3 et SLᵢ₊₁4 sont supportés par le noeud de bordure N4.

### • Corrélation centralisée

Dans un premier mode de réalisation non limitatif, l'étape de corrélation est effectuée de manière centralisée au niveau d'une tierce partie AI qui connaît l'ensemble des éléments de service SE des différents domaines D du réseau de communication ntw et les interconnexions entre les domaines (appelé « peering » en anglais) dudit réseau de communication ntw. Dans ce cas, les différents opérateurs des différents domaines font partie d'une alliance gérée par la tierce partie AI.

On notera que les interconnexions entre les domaines du réseau de communication ntw permettent de connaître les connexions entre les noeuds de bordure entre deux domaines, à savoir quels sont les noeuds de bordure d'un domaine Di qui sont connectés avec les noeuds de bordure d'un domaine adjacent Di+1.

On notera que dans une étape préalable, un domaine a fourni, lors d'une réponse à une requête d'instanciation, l'ensemble des labels de service correspondant aux noeuds de bordure d'entrée ini et aux noeuds de bordure de sortie egi dudit domaine D.

Si on note e=(eg, in) une connexion (ou interconnexion) entre les noeuds de bordure d'entrée in et les noeuds de bordure de sortie eg des domaines, avec eg ε egᵢ, in ε inᵢ₊₁. Si une connexion e = (eg, in) avec eg ε egᵢ, in ε inᵢ₊₁ existe et SL(eg) ≠∅, SL(in) ≠∅, alors SL(eg) x SL(in) représente l'ensemble des corrélations possibles entre SL(egᵢ) and SL(inᵢ₊₁). Par extension, SL(egᵢ) x SL(inᵢ₊₁) représente les corrélations entre le domaine i et le domaine i+1 pour toutes les connexions e = (eg, in) avec eg ε egᵢ, in ε inᵢ₊₁.

Ainsi, pour une chaine de domaines Sd= (0, 1, ..., N), l'ensemble des corrélations possibles est : SL = SL(eg0) x SL(in1) x SL(eg1) x ....x SL(inᵢ) x SL(egᵢ) x SL(inᵢ₊₁) x ....x SL(eg_{N-1}) x SL(in_{N}) avec SL(inᵢ) x SL(egᵢ) non nul.

Autrement dit, l'étape de corrélation s'effectue sur l'ensemble des domaines D participant à une séquence Sq d'éléments de service SE et entre chacun des labels de service SLi d'un noeud de bordure de sortie egᵢ d'un domaine Di et chacun des labels de service SLi+1 d'un noeud d'entrée adjacent inᵢ₊₁ d'au moins un domaine adjacent interconnecté Di+1 auquel le noeud de bordure de sortie egᵢ est connecté.

On notera que lorsque plusieurs séquences Sq ont été trouvées, on effectue l'étape de corrélation pour les autres séquences Sq également. Dans un mode de réalisation non limitatif, on peut mémoriser les corrélations faites sur une séquence Sq et utiliser ces corrélations mémorisées pour d'autres séquences Sq impliquant une même interconnexion entre deux domaines.

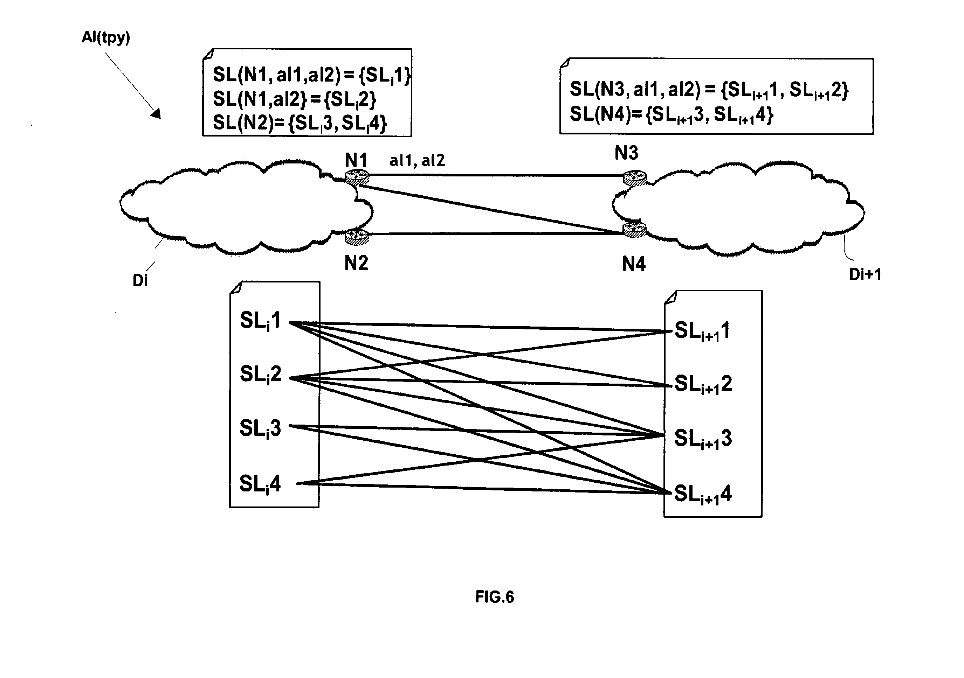

Ainsi, tel qu'illustré sur la Fig. 6, la donnée primaire dat1 correspondant à l'identifiant ad_n du noeud de bordure qui supporte le label de service est pris en compte pour réaliser la corrélation. Ainsi, comme le noeud de bordure de sortie N1 du domaine Di est connecté au noeud de bordure d'entrée adjacent N3 et au noeud de bordure d'entrée adjacent N4 du domaine Dᵢ₊₁, et comme le noeud de bordure de sortie N2 du domaine Di est connecté au noeud de bordure d'entrée adjacent N3 et au noeud de bordure d'entrée adjacent N4 du domaine Dᵢ₊₁, la tierce partie AI effectue une corrélation entre les labels de service SL supportés par ces noeuds, soit entre :
- SLi1 et SLᵢ₊₁1 (pour la connexion N1-N3)
- SLi1 et SLᵢ₊₁2 (pour la connexion N1-N3)
- SLi1 et SLᵢ₊₁3 (pour la connexion N1-N4)
- SLi1 et SLᵢ₊₁4 (pour la connexion N1-N4)
- SLi2 et SLᵢ₊₁1 (pour la connexion N1-N3)
- SLi2 et SLᵢ₊₁2 (pour la connexion N1-N3)
- SLi2 et SLᵢ₊₁3 (pour la connexion N1-N4)
- SLi2 et SLᵢ₊₁4 (pour la connexion N1-N4)
- SLi3 et SLᵢ₊₁3 (pour la connexion N2-N3)
- SLi3 et SLᵢ₊₁4 (pour la connexion N2-N4)
- SLi4 et SLᵢ₊₁3 (pour la connexion N2-N3)
- SLi4 et SLᵢ₊₁4 (pour la connexion N2-N4)

Par ailleurs, pour la donnée primaire dat1 prise en compte qui est l'identifiant d'un lien d'adjacence, la corrélation s'effectuera dans l'exemple illustré à la Fig. 6 :
SLi1 et SLi+1 car ils ont deux liens d'adjacence al1, al2 en commun
SLi1 et SLi+2 car ils ont deux liens d'adjacence al1, al2 en commun
SLi2 et SLi+1 car ils ont un lien d'adjacence al2 en commun
SLi2 et SLi+2 car ils ont un lien d'adjacence al2 en commun

Par souci de simplification, les autres SLi3 et SLi4 ne sont pas pris en compte dans cet exemple.

Dans le cas où la corrélation s'effectue dans un mode de réalisation non limitatif avec également des données secondaires dat2, elle s'effectue de la manière suivante.

Par exemple, si la donnée secondaire dat2 correspondant au type de technologie utilisée tech_t sur le noeud de bordure n'est pas de type générique, elle est prise en compte pour réaliser la corrélation.

Ainsi, par exemple, si la technologie déployée (intra-domaine) dans le domaine Di est MPLS-DiffServ et celle déployée (intra-domaine) dans le domaine adjacent Di+1 est également MPLS-DiffServ, la corrélation va se réaliser de façon optimale entre les labels de service SLi et SLi+1 cités ci-dessus car les deux technologies intra-domaines sont facilement interopérables entre elles.

Par contre, si la technologie déployée (intra-domaine) dans le domaine Di est MPLSlnserv (qui utilise le protocole RSVP-TE) et celle déployée (intra-domaine) dans le domaine adjacent Di+1 est MPLS-DiffServ, la corrélation ne va pas se réaliser facilement entre les labels de service SLi et SLi+1 cités ci-dessus car ces deux technologies ne sont pas facilement interopérables entre elles car la première utilise la signalisation RSVP-TE et pas la deuxième.

On rappelle que la technologie MPLS-DiffServ utilise des bits du champ EXP de l'entête du label MPLS pour différencier les flux. Ainsi les classes DiffServ vues précédemment seront codées dans ces bits.

Par contre, la technologie MPLSInServ n'utilise pas ces bits du champ EXP de l'entête du label MPLS. Il utilise la fonctionnalité RSVP-TE.

On entend par technologies facilement interopérables, des technologies qui évitent le moins possible de translation technologique (ou conversion) entre technologies supportées par deux noeuds de bordure adjacents. En effet, une translation technologique entraîne un type d'encapsulation particulier, une corrélation entre une QoS représentée dans une technologie vers une autre QoS représentée dans l'autre technologie. Plus la translation est difficile, plus il y a de distorsion et de dégradation d'information.

Bien entendu, le degré d'interopérabilité acceptée est définie par l'entité tierce dans un modèle centralisé ou par les deux opérateurs successifs dans un modèle distribué.

Par exemple, si la donnée secondaire dat2 prise en compte est la date de validité ed, on ne prendra pour la corrélation que les labels de service SLi et SLi+1 qui ont une date de validité supérieure à une date de validité déterminée. Tous les autres labels seront supprimés, autrement dit, ils ne seront pas pris en compte pour la corrélation.

Par exemple, si la donnée secondaire dat2 prise en compte est l'indice de priorité pf, on ne prendra pour la corrélation que les labels de service SLi et SLi+1 qui ont un indice de priorité supérieur ou égal à un indice de priorité déterminé. Tous les autres labels seront supprimés, autrement dit, ils ne seront pas pris en compte pour la corrélation.

Dans un mode de réalisation non limitatif, l'étape de corrélation comporte, au niveau de chaque domaine Di, les étapes supplémentaires suivantes :
- crypter les labels de service SLi identifiés et supportés par les noeuds de bordure de sortie identifiés egᵢ avec la clef de chiffrage kid ;
- crypter les labels de services SLi identifiés et supportés par les noeuds de bordure d'entrée identifiés inᵢ avec la clef de chiffrage kid.

L'étape de cryptage ou chiffrement se fait avant l'étape de publication des labels de service SL.

Le déchiffrement s'effectue par exemple lors de la réception d'un label de service SL provenant de l'extérieur d'un domaine, à savoir lorsque le domaine i reçoit par exemple le label de service SLi de la tierce partie, par exemple lors de l'activation du service S.

De la même manière, dans un mode de réalisation non limitatif, l'étape de corrélation comporte, au niveau de chaque domaine Di, les étapes supplémentaires suivantes :
- d'ajouter des données de redondance à la suite des labels de service SLi identifiés et supportés par les noeuds de bordure de sortie identifiés egᵢ avec le checksum chk ;
- d'ajouter des données de redondance à la suite des labels de services SLi identifiés et supportés par les noeuds de bordure d'entrée identifiés inᵢ avec le checksum chk.

### • Corrélation distribuée

Dans un deuxième mode de réalisation non limitatif, l'étape de corrélation est effectuée de manière distribuée au niveau de chaque domaine Di participant à une séquence Sq d'éléments de service SE.

Lorsqu'une demande de service S est envoyée à l'opérateur d'un domaine Di-1 à partir d'un domaine source D0, la séquence Sq d'éléments de service SE est recherchée comme décrit précédemment dans la première étape. Par la suite, pour cette séquence Sq, chaque domaine i effectue une corrélation SL(egᵢ)XSL(inᵢ₊₁), avec SL(egᵢ)XSL(inᵢ₊₁) représentant la corrélation exhaustive entre les labels de service SLegi des noeuds de bordure d'entrée du domaine Di et les labels de service SLinᵢ₊₁ des noeuds de sortie du domaine suivant adjacent Di+1. On obtient ainsi une liste LIST de combinaison de labels de service SL(egᵢ)XSL(inᵢ₊₁).

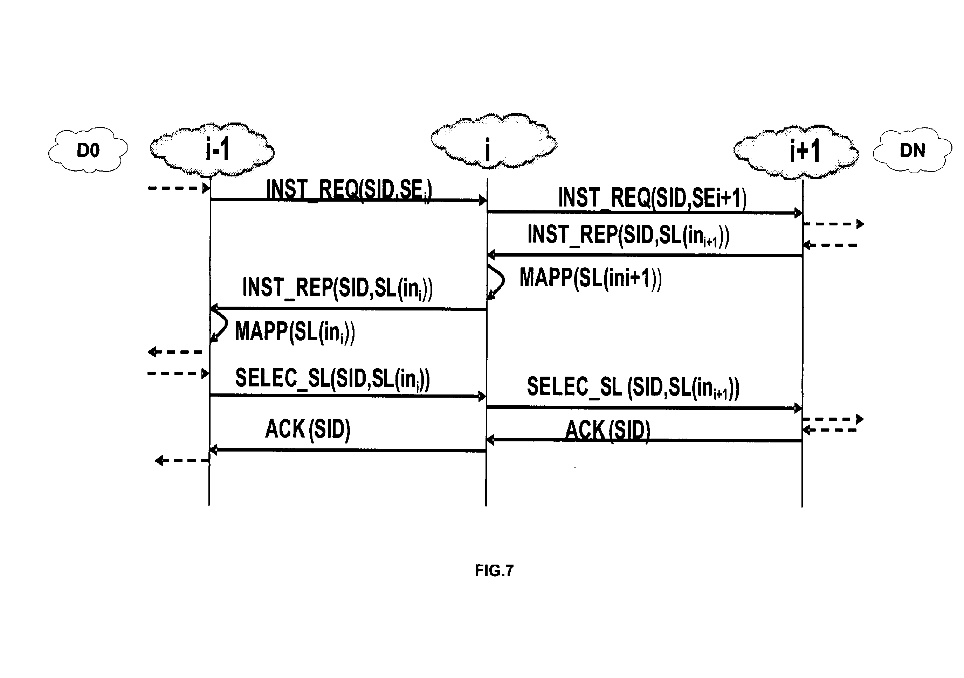

Tel qu'illustré sur la Fig. 7, ainsi, une demande d'instanciation INST_REQ est transmise du domaine source D0 d'où est issue la demande de service S, jusqu'à ce qu'elle atteigne le domaine cible DN. Cette demande d'instanciation comprend un identifiant SID de la demande de service S et le ou les éléments de service SE correspondant à chaque domaine qui satisfait à la séquence Sd.

Le domaine cible active DN la procédure de corrélation (décrite en détail ci-après) et transmet ses labels de service SLin supportés par ses noeuds de bordure d'entrée inᵢ₊₁ au domaine précédent. Le processus est réalisé ainsi de suite jusqu'à ce qu'il atteigne le domaine source D0. On notera que l'étape de corrélation réalisée dans chaque domaine comprend également un processus de corrélation interne (à savoir des chemins internes) entre les labels de service de sortie SLegᵢ (corrélés avec les labels de service d'entrée SLinᵢ₊₁ de son successeur) et les labels de service d'entrée SLinᵢ (transmis à au domaine précédent).

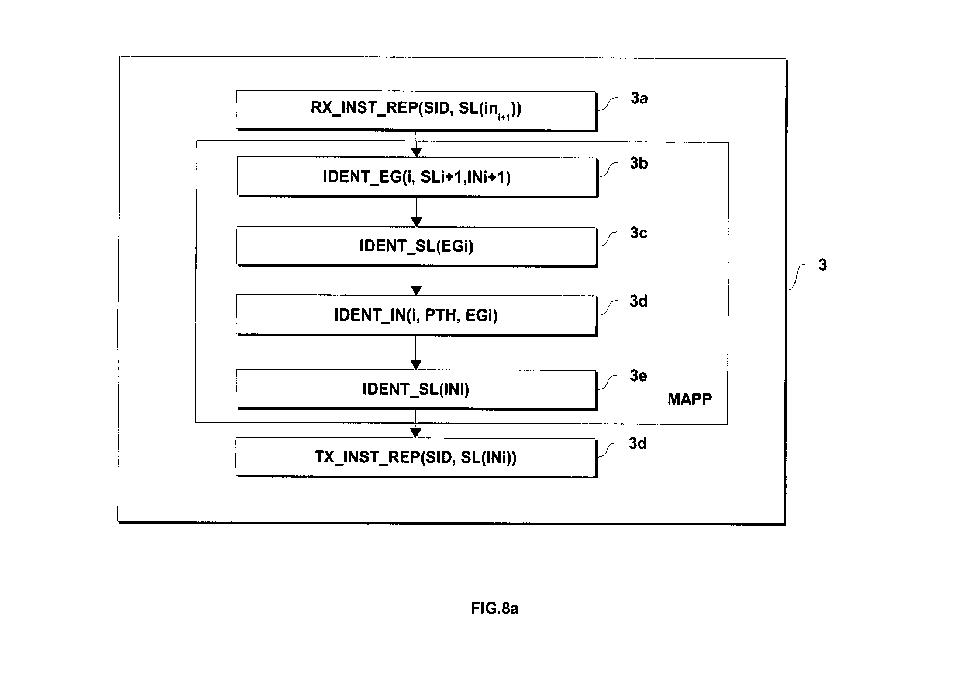

Ainsi, dans un mode de réalisation non limitatif, compte tenu d'une requête d'instanciation INST_REQ du domaine source D0 vers le domaine cible DN, tout domaine Di appartenant à la chaîne de domaines Sd effectue les étapes suivantes, tel qu'illustré à la Fig. 8a :
- recevoir un label de service SLᵢ₊₁ d'un domaine adjacent suivant Di+1 (étape RX_INST_REP(SID, SL(inᵢ₊₁)) ;
- identifier les noeuds de bordure de sortie egᵢ du domaine Di connectés aux noeuds de bordure d'entrée inᵢ₊₁ du domaine adjacent suivant Di+1 qui supportent ledit label de service SLi+1 (étape IDENT_EG(i, SLi+1, inᵢ₊₁)) ;
- identifier les labels de services SLi supportés par les noeuds de bordure de sortie identifiés egᵢ (étape IDENT_SL(egᵢ)) ;
- identifier les noeuds de bordure d'entrée inᵢ du domaine Di pour lesquels un chemin Pth existe avec les noeuds de bordure de sortie identifiés egᵢ dudit domaine Di (étape IDENT_IN(i, PTH, egᵢ)) ;
- identifier les labels de services SLi supportés par les noeuds de bordure d'entrée identifiés inᵢ (étape IDENT_SL(INi)) ;
- transmettre lesdits labels de services identifiés SLi au domaine adjacent précédent Di-1 (étape TX_INST_REP(SID, SL(inᵢ)).

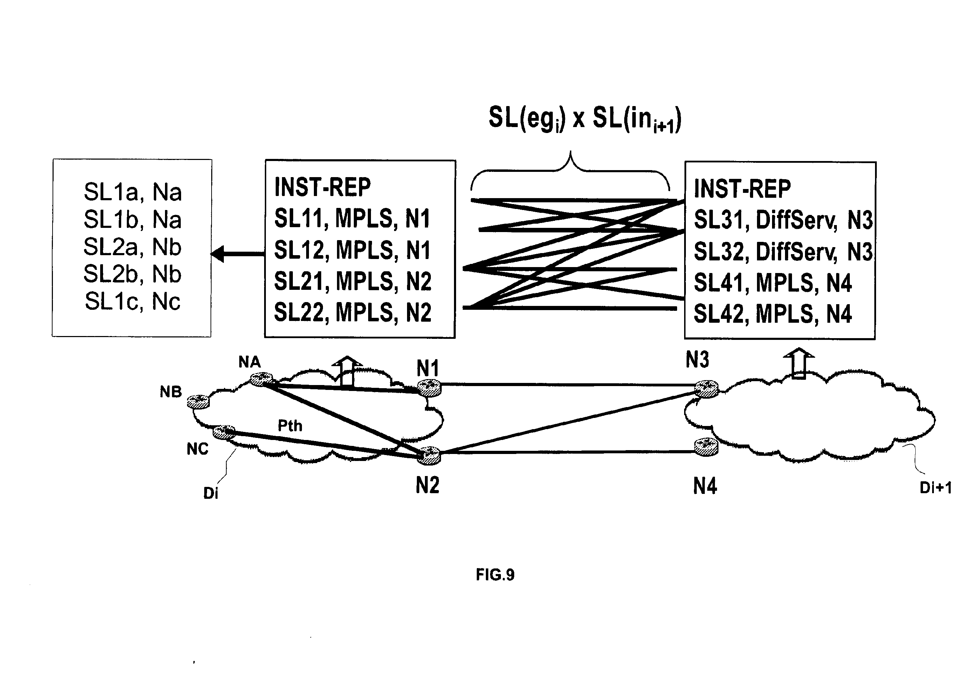

Tel qu'illustré sur l'exemple non limitatif de la Fig. 9, deux domaines Di et Di+1 sont représentés. Le premier domaine Di comporte deux noeuds de bordure de sortie N1 et N2 qui sont connectés respectivement aux noeuds de bordure N3 et N4 pour le premier noeud N1, et N4 pour le deuxième noeud N2.

Le domaine Di propose les quatre labels de service SL11, SL12 et SL21, SL22.

Les labels de service SL11, SL12 sont supportés par le noeud de bordure N1 tandis que les labels de service SL21 et SL22 sont supportés par le noeud de bordure N2. Lesdits noeuds N1 et N2 supportent la technologie MPLS-DlffServ.

Le domaine Di comporte en outre trois noeuds de bordure d'entrée NA, NB NC. Le noeud NA est connecté au noeud N1 et N2, tandis que le noeud NC est connecté au noeud N2. Les connexions se font via des chemins Pth.

Le domaine Di+1 propose les quatre labels de service SL31, SL32, SL41 et SL42.

Les labels de service SL31 et SL32 sont supportés par le noeud de bordure N3 tandis que les labels de service SL41 et SL42 sont supportés par le noeud de bordure N4. Ledit noeud N3 supporte la technologie DiffServ, tandis que ledit noeud N4 supporte la technologie MPLS.

Dans l'exemple de la Fig. 9, le domaine Di va par exemple :
- recevoir le label de service SL31 du domaine adjacent suivant Di+1 ;
- identifier les noeuds de bordure de sortie egᵢ, soient N1 et N2 du domaine Di connectés aux noeuds de bordure d'entrée inᵢ₊₁, soit N3 du domaine adjacent suivant Di+1 qui supportent ledit label de service SL31
- identifier les labels de services, soient SL11, SL12, SL21, SL22 supportés par les noeuds de bordure de sortie identifiés egᵢ ;
- identifier les noeuds de bordure d'entrée inᵢ, soient NA et NC du domaine Di pour lesquels un chemin Pth existe avec les noeuds de bordure de sortie identifiés egᵢ dudit domaine Di ;
- identifier les labels de services, soient SL1a, SL1b et SL2c supportés par les noeuds de bordure d'entrée identifiés inᵢ ;
- transmettre lesdits labels de services identifiés SL1a, SL1b et SL2c au domaine adjacent précédent Di-1.

On notera que lors de l'identification des noeuds de bordure d'entrée inᵢ, soient NA, NC du domaine Di pour lesquels un chemin Pth existe avec les noeuds de bordure de sortie identifiés egᵢ dudit domaine Di, on regarde également si le chemin Pth répond aux contrainte Qos imposées par le service S demandé.

Ainsi, cette étape de corrélation permet :
- d'enlever les labels de service SL du domaine Di dont les noeuds de bordure de sortie egᵢ correspondant ne sont pas interconnectés avec les noeuds de bordure d'entrée adjacents inᵢ₊₁ ;
- d'enlever les labels de service SL du domaine Di dont les noeuds de bordure de sortie egᵢ ne permettent pas d'obtenir un chemin avec des noeuds de bordure d'entrée inᵢ du domaine Di, et donc de ne pas retenir non plus les labels de service SL de ce même domaine Di correspondant auxdits noeuds de bordure d'entrée inᵢ.

Le domaine Di va réitérer ces étapes avec chacun des labels de service suivants SL32, SL33, SL41 et SL44.

Ainsi, tous les domaines D participant à la séquence Sq d'éléments de service SE, effectuent les étapes telles que vues ci-dessus, jusqu'à ce que le domaine source D0 (d'où est partie la demande de service S) soit atteint. Au final, on obtient pour chaque domaine D une liste LIST comprenant un ensemble de labels de service SL(inᵢ₊₁) et SL(egᵢ) (des noeuds entrant et sortant) qui satisfont à la séquence Sq d'éléments de service et aux chemins intra-domaines.

Ainsi, on remarque que lors de cette corrélation de proche en proche, la sélection d'un noeud de bordure d'entrée inᵢ d'un domaine Di correspondant peut être restreinte par :
- la contrainte intra-domaine d'un chemin pth ; et
- la sélection du noeud de sortie egi du même domaine.

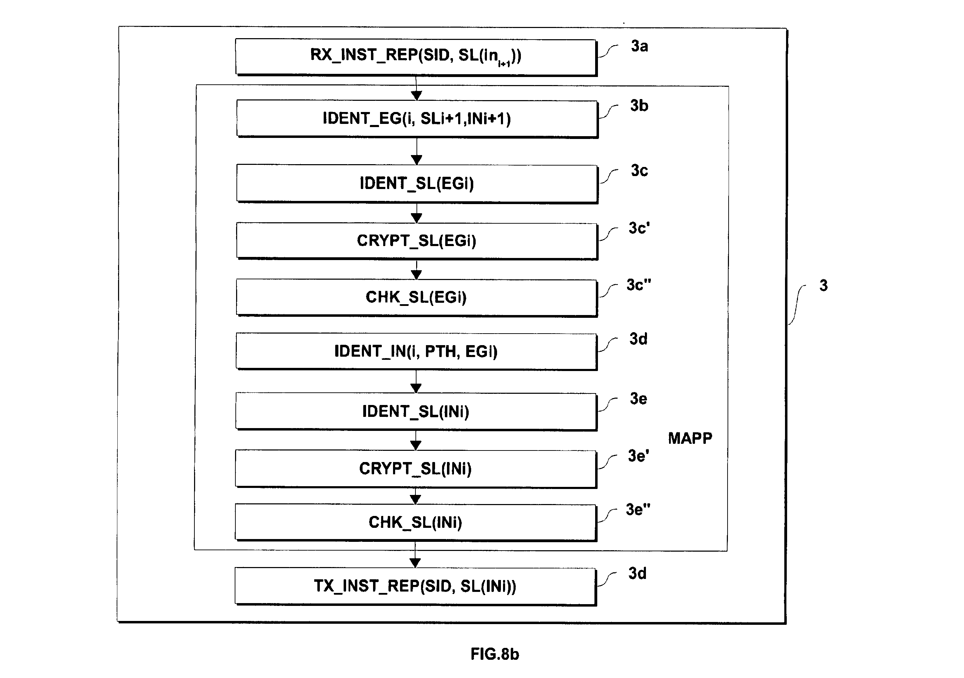

Dans un mode de réalisation non limitatif, l'étape de corrélation comporte, au niveau de chaque domaine Di, les étapes supplémentaires suivantes, tel qu'illustré sur la Fig. 8b :
- crypter les labels de service SLi identifiés et supportés par les noeuds de bordure de sortie identifiés egᵢ (étape CRYPT_SL(egᵢ)) avec la clef de chiffrage kid ;
- crypter les labels de services SLi identifiés et supportés par les noeuds de bordure d'entrée identifiés inᵢ (étape CRYPT_SL(inᵢ)) avec la clef de chiffrage kid.

On notera que le décryptage des labels de service sera fait par le domaine Di-1 adjacent qui reçoit la réponse (INST_REP(SID, SL(inᵢ)) à la demande d'instanciation du domaine Di (INST_REQ(SID, SEi)).

Dans un mode de réalisation non limitatif, l'étape de corrélation comporte, au niveau de chaque domaine Di, les étapes supplémentaires suivantes, tel qu'illustré sur la Fig. 8b :
- d'ajouter des données de redondance à la suite des labels de service SLi identifiés et supportés par les noeuds de bordure de sortie identifiés egᵢ (étape CHK_SL(egᵢ)) avec le checksum chk ;
- d'ajouter des données de redondance à la suite des labels de services SLi identifiés et supportés par les noeuds de bordure d'entrée identifiés inᵢ (étape CHK_SL(in₁)) avec le checksum chk.

On notera que la vérification de l'intégrité des labels de service sera faite par le domaine adjacent Di-1 qui reçoit la réponse (INST_REP(SID, SL(inᵢ)) à la demande d'instanciation du domaine Di (INST_REQ(SID, SEi)).

Ainsi, une fois que le domaine source D0a été atteint, la sélection d'un label de service SL peut se faire selon laquelle on choisit un label de service SLi parmi les combinaisons SL (egᵢ) x SL (inᵢ₊₁).

Au final (que la corrélation soit réalisée de manière centralisée ou de manière distribuée), on obtient ainsi pour l'ensemble des domaines D appartenant à la séquence de domaines Sd une liste LIST de labels de service SL qui satisfont :
- à la séquence Sq d'éléments de service SE et donc à la demande de service S et donc aux contraintes de QoS du service ;
- aux contraintes intra-domaine (les chemins Pth notamment).

On notera que les contraintes intra-domaines impliquent notamment ;
- une technologie donnée (il peut y avoir plusieurs technos déployées dans un même domaine) ;
- des contraintes de QoS à respecter ;
- l'état de charge du réseau ;
- les pannes éventuelles à un l'instant où se déroule l'instanciation du service ; etc.

On notera que dans le cas où une transmission d'un service se fait de manière « croissante » du domaine source D0 vers le domaine cible DN, la corrélation s'effectue entre les labels de service des noeuds de bordure sortant SL(egᵢ) et des noeuds de bordure entrant SL(inᵢ₊₁).

Dans le où une transmission d'un service se fait de manière « décroissante » du domaine cible DN vers le domaine source D0, la corrélation s'effectue entre les labels de service des noeuds de bordure entrant SL(inᵢ) et des noeuds de bordure sortant SL(egᵢ₊₁).

**Ainsi, dans une quatrième étape 4)**, on sélectionne un label de service parmi ladite liste LIST (étape SELEC_SL(LIST, pf)).

Dans un mode de réalisation non limitatif, un label de service SL est sélectionné en fonction de l'indice de priorité pf décrit précédemment.

On obtient ainsi pour chaque domaine D de la séquence de domaines Sd un label de service SL qui satisfait à la demande de service S et aux contraintes intra-domaines.

On notera que si aucune correspondance possible n'existe, alors l'étape de corrélation échoue et donc l'instanciation échoue et un code d'erreur doit être renvoyé.

On notera que dans le cas où l'indice de priorité pf n'est pas renseigné, la sélection d'un label de service SL peut se faire en fonction d'une convention fixée par les différents opérateurs, dans un exemple non limitatif, en prenant le premier label de service SL dans la liste LIST.

A un niveau différent du niveau de service, pour chaque domaine D participant à ladite séquence Sq, on sélectionne un identifiant de ressources correspondant RL, ledit identifiant de ressources RL comprenant les données réseaux dat3 relatives à des ressources réseaux de bordure inter-domaines res supportées par le noeud de bordure b_no qui supporte le label de service sélectionné SL.

Cette étape correspond ainsi à une corrélation entre le label de service sélectionné SL et l'identifiant de ressources RL correspondant.

Dans un mode de réalisation non limitatif, illustré sur la Fig. 5b, cette étape de sélection se fait un niveau de supervision MP.

Dans un autre mode de réalisation non limitatif, cette étape de sélection se fait au niveau réseau NP.

Dans un premier mode de réalisation non limitatif, on sélectionne l' identifiant de ressources RL à partir de l'identifiant de label de service ids du label de service sélectionné SL lorsque ce dernier indexe les données réseaux dat3 décrivant les ressources res.

Dans un deuxième mode de réalisation non limitatif, on sélectionne l'identifiant de ressources RL à partir de la clef de chiffrage kid lorsque cette dernière indexe les données réseaux dat3 décrivant les ressources res.

Dans des exemples de réalisation non limitatif, les données réseaux dat3 d'un identifiant de ressources RL comprennent par exemple:
- Un label (G)MPLS ; ou
- Une classe Diffserv ; ou
- Une longueur d'onde.

Dans des modes de réalisation non limitatifs, cette étape peut être également faite sur des niveaux logiques différents du niveau supervision, tels que le niveau de service tel que dans un système OSS (« Operational support system », ou au niveau réseau tel que sur le plan de contrôle.

**Dans une sixième étape 6)**, au niveau réseau NP, pour chaque domaine D participant à ladite séquence Sq, on vérifie la disponibilité des ressources réseaux de bordure inter-domaines res définies dans l'identifiant de ressources sélectionné RL et on réserve lesdites ressources réseaux de bordure inter-domaines res si elles sont disponibles

Dans un mode de réalisation non limitatif, on vérifie la disponibilité en fonction de contraintes déterminées telles que dans des exemples non limitatifs :
- la congestion d'une ressource réseau ;
- si les ressources ont déjà été réservées.

On notera qu'on entend par réservation d'une ressources, le fait de mettre une option sur lesdites ressources (ou de la bloquer) pour le service S demandé. Ceci évite d'autres services S de les utiliser.

Ainsi, le procédé de sélection de ressources réseaux de bordure inter-domaines permet d'effectuer une demande de service dans un réseau de communication comprenant des domaines qui supportent des technologies de communication hétérogènes tout en protégeant la confidentialité des ressources réseaux au niveau d'un domaine.

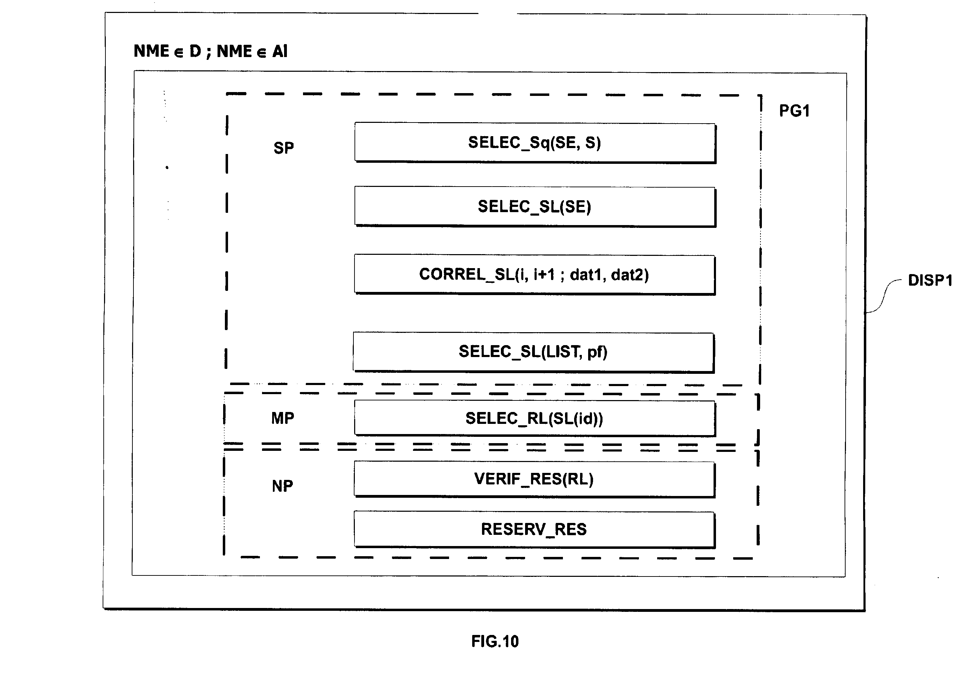

Le procédé de sélection de ressources réseaux de bordure inter-domaines d'un réseau de communication ntw, est mis en oeuvre par un dispositif DISP1 de sélection de ressources réseaux de bordure inter-domaines d'un réseau de communication ntw, un domaine D étant sous la responsabilité d'un opérateur unique et comprenant une pluralité de noeuds no dont au moins un noeud de bordure b_no, les domaines étant divisés en au moins trois niveaux dont un niveau de service SP, un niveau de supervision MP et un niveau réseau NP, illustré de façon schématique à la Fig. 10 selon un mode de réalisation non limitatif.

Le dispositif DISP1 étant adapté pour :
- au niveau de service SP:
   - sélectionner au moins une séquence Sq d'éléments de service SE, ladite séquence Sq satisfaisant une demande de service S d'un utilisateur d'un domaine D, un élément de service SE étant associé à un domaine D et comprenant des données de qualité de service QoS et une référence pte vers une pluralité de labels de service SL ;
   - pour chaque domaine D participant à ladite séquence Sq :
      - sélectionner des labels de service SL correspondant aux éléments de service SE de ladite séquence Sq, un label de service SL comprenant les données primaires suivantes dat1 :
         - un identifiant de label de service ids ;
         - au moins un identifiant ad_n d'un noeud de bordure qui supporte le label de service ;
         - au moins un identifiant id_Ink d'un lien d'adjacence entre ledit noeud de bordure et un noeud de bordure adjacent ;
      - effectuer une corrélation entre chacun des labels de service SLi du domaine Di et les labels de service SLi+1 d'au moins un domaine adjacent interconnecté Di+1 en fonction des données primaires dat1 des labels de service SL de sorte à obtenir une liste LIST de labels de service SLi ;
      - sélectionner un label de service parmi ladite liste LIST ;
- à un niveau différent du niveau de service, pour chaque domaine D participant à ladite séquence Sq, sélectionner un identifiant de ressources correspondant RL, ledit identifiant de ressources RL comprenant des données réseaux dat3 relatives à des ressources réseaux de bordure inter-domaines res supportées par le noeud de bordure b_no qui supporte le label de service sélectionné SL ; et
- au niveau réseau NP, pour chaque domaine D participant à ladite séquence Sq, vérifier la disponibilité des ressources réseaux de bordure inter-domaines res définies dans l'identifiant de ressources sélectionné RL et réserver lesdites ressources réseaux de bordure inter-domaines res si elles sont disponibles.

Selon un premier mode de réalisation non limitatif, le dispositif DISP1 est composé d'un élément de gestion NME d'un domaine D. Il est utilisé dans le mode distribué vu précédemment. Dans ce cas, dans des exemples non limitatifs, l'élément de gestion NME est :
- un élément PCE, appelé en anglais "Path Computation Element" tel que spécifié dans le document RFC4555 - A Path Computation Element (PCE) - based Architecture - August 2006. (qui est un serveur ou un noeud réseau) ; ou
- un OSS appelé en anglais "Operational Support System" qui est un système de un ou plusieurs serveurs.

Selon un deuxième mode de réalisation non limitatif, le dispositif DISP1 est composé d'un élément de gestion NME d'une tierce partie AI qui connaît l'ensemble des éléments de service SE des différents domaines D du réseau de communication ntw et les interconnexions entre les domaines dudit réseau de communication ntw. Il est utilisé dans le mode centralisé vu précédemment. Dans ce cas, dans un exemple non limitatif, un élément de gestion est un élément de gestion d'un AO appelé en anglais « administrative owner » qui est la tierce partie indépendante des opérateurs.

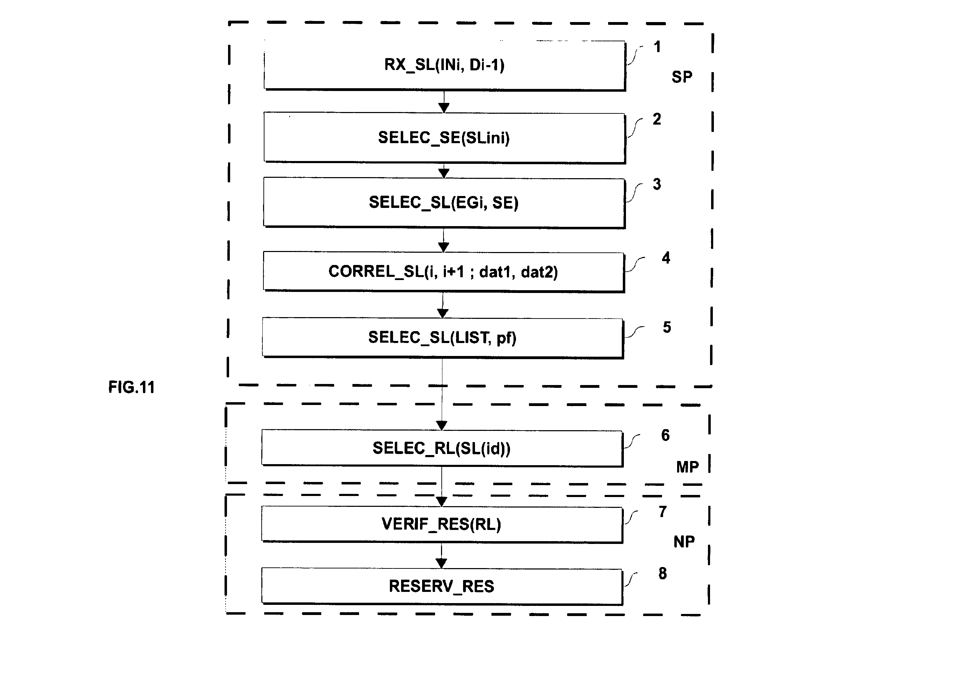

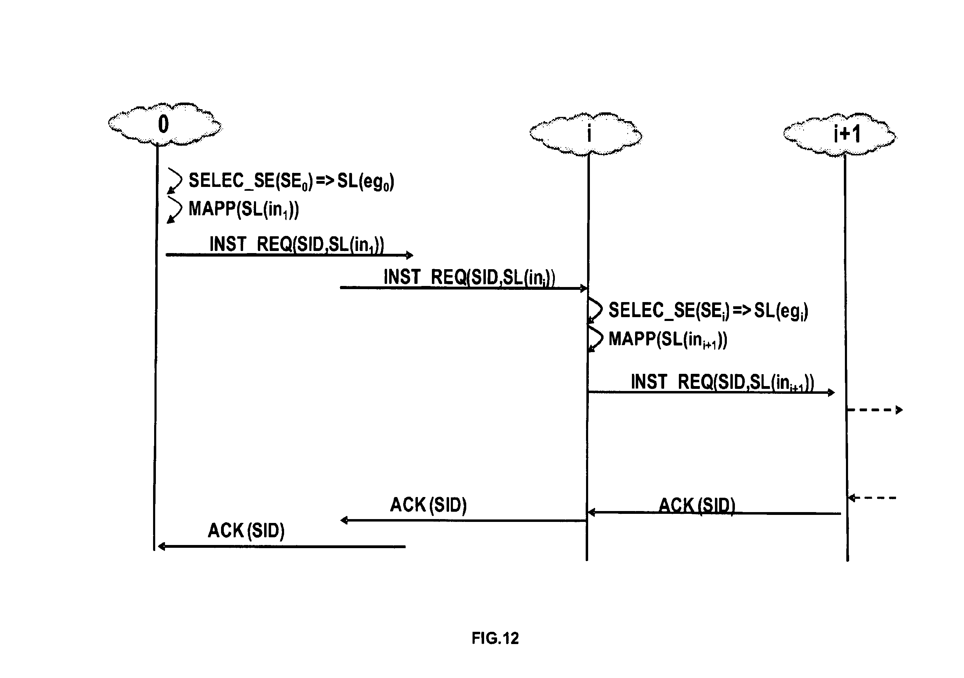

Ainsi, le procédé décrit a été décrit en sélectionnant une séquence d'éléments de service au départ puis en effectuant la corrélation entre labels de service qui correspondent à la séquence d'éléments de service. La corrélation est faite ainsi de manière récursive en partant du domaine cible. Dans un autre mode de réalisation, la corrélation peut être faite de manière récursive en partant du domaine cible de la manière suivante et telle qu'illustré aux Fig. 11 à 13.

On notera que les étapes décrites ci-dessus sont effectuées aussi bien selon le mode centralisé que selon le mode distribué.

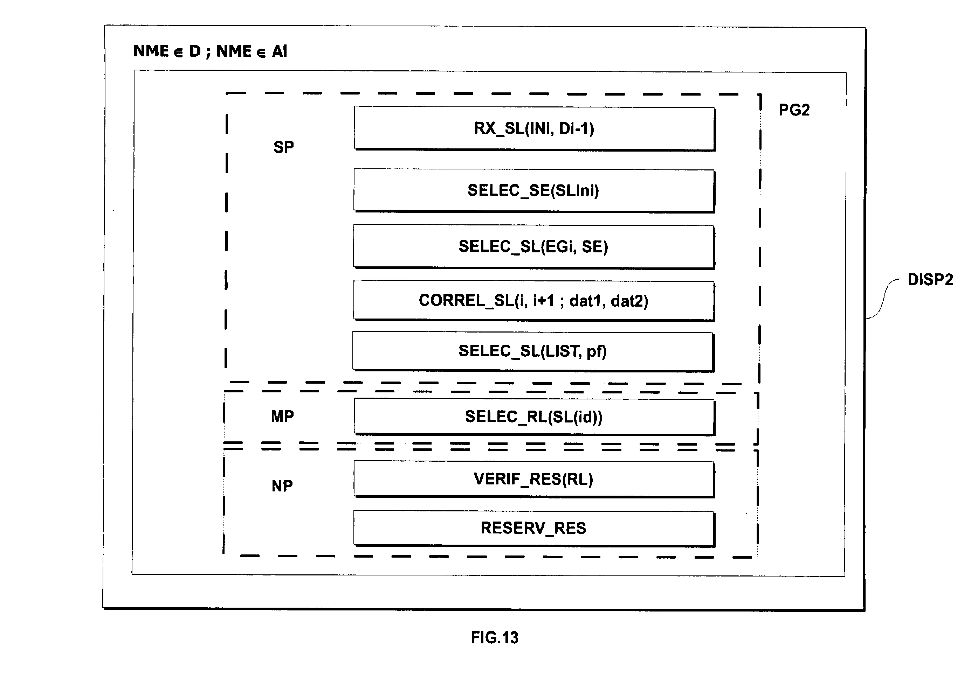

Ainsi, selon un deuxième aspect de l'invention décrit aux Fig. 11 à 13, un procédé de sélection de ressources réseaux de bordure inter-domaines d'un réseau de communication est décrit, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, le procédé comprenant les étapes de, pour chaque domaine Di (différent du domaine source D0 échangeant de messages avec un domaine précédent Di-1 :
- au niveau de service SP :
   - recevoir un label de service SL(ini) du domaine Di sélectionné par un domaine adjacent précédent Di-1 (étape RX_SL(lni, Di-1) illustrée à la Fig. 13);
   - sélectionner au moins un élément de service SEi correspondant audit label de service SL(ini) reçu, un élément de service SE étant associé à un domaine D et comprenant des données de qualité de service QoS et une référence pte vers une pluralité de labels de service SL (étape SELEC_SE(SLini)) ;
   - sélectionner les labels de service SL(egᵢ) qui correspondent à cet élément de service SEi, un label de service SL comprenant les données primaires suivantes dat1 (étape SLEC_SL(egᵢ, SE):
      - un identifiant de label de service ids ;
      - au moins un identifiant ad_n d'un noeud de bordure qui supporte le label de service ;
      - au moins un identifiant id_Ink d'un lien d 'adjacence entre ledit noeud de bordure et un noeud de bordure adjacent ;
   - effectuer une corrélation entre chacun des labels de service SL(egᵢ) et les labels de service SL(inᵢ₊₁) d'au moins un domaine adjacent interconnecté Di en fonction des données primaires dat1 des labels de service SL de sorte à obtenir une liste LIST de labels de service SL (étape CORREL_SL(i, i+1 ; dat1, dat2) ;
   - sélectionner un label de service SL(inᵢ₊₁) parmi ladite liste LIST (étape SELECT_SL(LIST, pf)) ;
- à un niveau différent du niveau de service, pour chaque domaine D, sélectionner un identifiant de ressources correspondant RL, ledit identifiant de ressources RL comprenant des données réseaux dat3 relatives à des ressources réseaux de bordure inter-domaines res supportées par le noeud de bordure b_no qui supporte le label de service sélectionné SL (étape SELEC_RL(SL(id)) ; et
- au niveau réseau NP, pour chaque domaine D, vérifier la disponibilité des ressources réseaux de bordure inter-domaines res définies dans l'identifiant de ressources sélectionné RL (étape VERIF_RES(RL)) et réserver lesdites ressources réseaux de bordure inter-domaines res si elles sont disponibles (étape RESERV_RES)).

Dans un mode de réalisation non limitatif, pour tous les domaines D différents du domaine source D0 et du domaine cible DN, le procédé de sélection comporte en outre une étape supplémentaire de transmettre ledit label de service SL(inᵢ₊₁) sélectionné au domaine adjacent Di+1.

On notera que comme vu précédemment, après l'étape de corrélation et avant l'étape de sélection, au final, on obtient pour chaque domaine D une liste LIST comprenant un ensemble de labels de service SL(egᵢ) et SL(inᵢ₊₁) (des noeuds sortant et entrant pour un sens de transmission des données du domaine D0 vers le domaine Dn) qui satisfont à la séquence Sq d'éléments de service et aux chemins intra-domaines.

Par ailleurs, au niveau du domaine source D0, le procédé de sélection comporte les étapes suivantes :
- au niveau de service SP :
   - sélectionner au moins un élément de service SE0 satisfaisant à une demande de service S, un élément de service SE étant associé à un domaine D et comprenant des données de qualité de service QoS et une référence pte vers une pluralité de labels de service SL ;
   - sélectionner les labels de service SL(eg₀) qui correspondent à cet élément de service SE0, un label de service SL comprenant les données primaires suivantes dat1 :
      - un identifiant de label de service ids ;
      - au moins un identifiant ad_n d'un noeud de bordure qui supporte le label de service ;
      - au moins un identifiant id_Ink d'un lien d 'adjacence entre ledit noeud de bordure et un noeud de bordure adjacent ;
   - effectuer une corrélation entre chacun des labels de service SL(eg₀) et les labels de service SL(in₁) d'au moins un domaine adjacent interconnecté D1 en fonction des données primaires dat1 des labels de service SL de sorte à obtenir une liste LIST de labels de service SL
   - sélectionner un label de service SL(in₁) parmi ladite liste LIST ;
   - transmettre ledit label de service SL(in₁) sélectionné au domaine adjacent D1.
- à un niveau différent du niveau de service, pour chaque domaine D, sélectionner un identifiant de ressources correspondant RL, ledit identifiant de ressources RL comprenant des données réseaux dat3 relatives à des ressources réseaux de bordure inter-domaines res supportées par le noeud de bordure b_no qui supporte le label de service sélectionné SL ; et
- au niveau réseau NP, pour chaque domaine D, vérifier la disponibilité des ressources réseaux de bordure inter-domaines res définies dans l'identifiant de ressources sélectionné RL et réserver lesdites ressources réseaux de bordure inter-domaines res si elles sont disponibles.

On notera que l'étape de transmission s'effectue sur l'ensemble des domaines adjacents Di+1 d'un domaine D.

En ce qui concerne le domaine cible DN, toutes les étapes décrites pour un domaine Di sont effectuées mis à part l'étape de transmission du label de service SL(inᵢ₊₁) sélectionné.

On notera que dans le cas où une transmission d'un service se fait de manière « croissante » du domaine source D0 vers le domaine cible Dn, la corrélation s'effectue entre les labels de service des noeuds de bordure sortant SL(egᵢ) et des noeuds de bordure entrant SL(inᵢ₊₁).

Dans le où une transmission d'un service se fait de manière « décroissante » du domaine cible Dn vers le domaine source D0, la corrélation s'effectue entre les labels de service des noeuds de bordure entrant SL(inᵢ) et des noeuds de bordure sortant SL(egᵢ₊₁).

Par ailleurs, les étapes décrites ci-dessus pour cet autre mode de réalisation et qui se retrouvent dans le mode de réalisation, dans lequel une séquence d'éléments de service est sélectionnée, sont identiques à ce mode de réalisation et la description qui en a été faite précédemment s'applique donc.

On notera que le procédé de sélection selon ce deuxième aspect de l'invention est mis en oeuvre par un dispositif DISP2, illustré à la Fig. 13, de sélection de ressources de bordure inter-domaines d'un réseau de communication, un domaine étant sous la responsabilité d'un opérateur unique et comprenant une pluralité de noeuds dont au moins un noeud de bordure, les domaines étant divisés en au moins trois niveaux dont un niveau de service, un niveau de supervision et un niveau réseau, ledit dispositif étant adapté pour :
- au niveau de service SP :
   - recevoir un label de service SL(inᵢ) du domaine Di sélectionné par un domaine adjacent précédent Di-1 ;
   - sélectionner au moins un élément de service SEi correspondant audit label de service SL(inᵢ) reçu, un élément de service SE étant associé à un domaine D et comprenant des données de qualité de service QoS et une référence pte vers une pluralité de labels de service SL ;
   - sélectionner les labels de service SL(egᵢ) qui correspondent à cet élément de service SEi, un label de service SL comprenant les données primaires suivantes dat1 :
      - un identifiant de label de service ids ;
      - au moins un identifiant ad_n d'un noeud de bordure qui supporte le label de service ;
      - au moins un identifiant id_Ink d'un lien d 'adjacence entre ledit noeud de bordure et un noeud de bordure adjacent ;
   - effectuer une corrélation entre chacun des labels de service SL(egᵢ) et les labels de service SL(inᵢ₊₁) d'au moins un domaine adjacent interconnecté Di en fonction des données primaires dat1 des labels de service SL de sorte à obtenir une liste LIST de labels de service SL
   - sélectionner un label de service SL(inᵢ₊₁) parmi ladite liste LIST ;
- à un niveau différent du niveau de service, pour chaque domaine D, sélectionner un identifiant de ressources correspondant RL, ledit identifiant de ressources RL comprenant des données réseaux dat3 relatives à des ressources réseaux de bordure inter-domaines res supportées par le noeud de bordure b_no qui supporte le label de service sélectionné SL ; et - au niveau réseau NP, pour chaque domaine D, vérifier la disponibilité des ressources réseaux de bordure inter-domaines res définies dans l'identifiant de ressources sélectionné RL et réserver lesdites ressources réseaux de bordure inter-domaines res si elles sont disponibles.

On notera que les différents modes de réalisation du dispositif DISP1 qui ont été décrits selon le premier aspect de l'invention s'appliquent également ici pour le dispositif DISP2 selon le deuxième aspect de l'invention.

On notera que la mise en oeuvre des procédés de sélection exposé ci-dessus peut être effectuée au moyen d'un dispositif micro programmé « software », d'une logique câblée et/ou de composants électroniques « hardware ».

Ainsi, le réseau de communication NTW peut comporter un ou plusieurs produits programmes d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé de sélection décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 10, un programme d'ordinateur PG1 est inscrit dans une mémoire du dispositif de sélection DISP1.

Dans l'exemple non limitatif de la Fig. 13, un programme d'ordinateur PG2 est inscrit dans une mémoire du dispositif de sélection DISP2.

Bien entendu la description n'est pas limitée à l'application, aux modes de réalisation et aux exemples décrits ci-dessus.
- Ainsi, dans un mode de réalisation non limitatif, les technologies tech_t utilisées peuvent être par exemple de type IPDiffServ qui utilise un champ DSCP pour déterminer les différents traitements des paquets de données.
- Ainsi, dans un mode de réalisation non limitatif, un service applicatif tya peut être par exemple une vidéo, ou un service de télémédecine (qui a besoin de différents canaux et notamment des canaux pour commander des appareils à distance).
- Ainsi, selon un mode de réalisation non limitatif, on peut par exemple appliquer au départ une forte contrainte sur l'interconnexion entre deux noeuds de bordure adjacents en définissant une combinaison de critères de corrélation basée sur plusieurs données primaires et secondaires (technologie supportée tech_t, contraintes QoS forte, ordre de préférence etc.) et diminuer cette contrainte de départ lorsque l'interconnexion devient plus chargée.
- Ainsi, dans un mode de réalisation non limitatif, on peut avoir deux programmes d'ordinateur dont un premier programme comprenant une ou plusieurs séquences d'instructions, l'exécution desdites séquences d'instructions permettant une mise en oeuvre de l'étape de sélection d'une séquence d'éléments de service et dont un deuxième programme comprenant une ou plusieurs séquences d'instructions, l'exécution desdites séquences d'instructions permettant une mise en oeuvre de les autres étapes.
- Ainsi, le procédé décrit peut s'appliquer à des applications type transport optique de données tels que des réseaux ASON (« Automatically Switch Optical Network »).
- Ainsi, les technologies utilisées peuvent être des technologies IP, Ethernet, SDH/SONET, X25, ATM etc.,

Ainsi, l'invention décrite présente notamment les avantages suivants :
- Le fait de définir un nouveau concept de label de service au niveau service permet de ne pas se soucier si deux labels ont la même dénomination et le fait d'établir une corrélation au niveau service permet l'utilisation de technologies hétérogènes sans avoir besoin obligatoirement de fonctionnalités de plan de contrôle. De plus, la confidentialité des caractéristiques des ressources réseaux est maintenu puisque les caractéristiques des ressources n'apparaissent qu'au niveau de supervision dans l'identifiant de ressources et pas au niveau de service.
- Ainsi, le même format de label est utilisé de bout en bout d'une chaîne de domaines. Cela facilite ainsi le travail d'une alliance (dans le cas centralisé) car elle n'a pas à prendre en compte de nouveaux formats de labels ou à supprimer d'anciens formats de label (qui sont inutilisés) de sa base de données quand un opérateur rejoint ou quitte ladite alliance. Ainsi, la même sémantique de label est utilisée pour tous les domaines de l'alliance, indépendamment des technologies utilisées par chaque domaine.
- la confidentialité est préservée (par exemple en cas d'erreur de routage vers un domaine tiers) car la corrélation entre les labels de service SL et l'identifiant de ressources associé est seulement effectuée au niveau local (niveau supervision) entre les deux opérateurs au travers d'une même interface ICI (appelée en anglais "Inter Carrier Interface") (par exemple au travers d'accords d'interconnexion). - Cela permet d'ajouter des fonctionnalités utiles au niveau service telles que la période de validité, la clef de chiffrage etc.
- Ainsi, cela permet de couvrir les problèmes de sécurité (eg. intégrité) des messages échangés.
- Ainsi, il n'est plus nécessaire de communiquer l'identifiant de ressources au niveau service. De plus, dans un mode centralisé, l'alliance n'a plus accès à l'ensemble des ressources réseaux allouées par un domaine faisant partie de l'alliance. La confidentialité et la sécurité des ressources réseaux est ainsi assurée.
- Ainsi, la définition des labels de service permet de préciser les contraintes QoS au niveau des interconnexions entre domaines et évite de communiquer les données ressources réseaux au niveau de service à travers tous les domaines participant à une même séquence d'éléments de service. Les problèmes de corrélation aux noeuds de bordure entre les différentes technologies déployées sont ainsi pris en compte.
- Ainsi, il n'est plus nécessaire d'avoir un environnement homogène où tous les domaines déploient la même technologie.
- Par ailleurs, le fait d'utiliser d'une part un label de service au niveau de service et d'autre part un identifiant ressources à un niveau différent du niveau de service évite d'utiliser un même label qui regroupe des données intra-domaine et des données inter-domaine et permet donc de garder les données intra-domaines confidentielles.
- Par ailleurs, grâce aux labels de service, on peut définir et choisir une combinaison de critères (technologie supportée, contrainte QoS, ordre de préférence etc.) à appliquer à la corrélation des labels de service.
- Enfin, il n'est plus nécessaire d'avoir forcément la fonctionnalité RSVP-TE au niveau de l'interface d'interconnexion entre deux domaines successifs, cette fonctionnalité permettant de configurer les connexions à cette interconnexion et réserver en même temps les ressources nécessaire à un service. Ainsi, la configuration des connexions, à cette interconnexion, peut être si on le désire, manuelle pour être conforme aux accords d'interconnexion entre les deux parties.

## Revendications

1. Procédé de sélection de ressources réseaux (res) de bordure inter-domaines d'un réseau de communication (ntw), un domaine (D) étant sous la responsabilité d'un opérateur unique et comprenant une pluralité de noeuds (no) dont au moins un noeud de bordure (b_no), les domaines étant divisés en au moins trois niveaux dont un niveau de service (SP), un niveau de supervision (MP) et un niveau réseau (NP), le procédé comprenant :
- au niveau de service (SP) :
- sélectionner au moins une séquence (Sq) d'éléments de service (SE), ladite séquence (Sq) satisfaisant une demande de service (S) d'un utilisateur d'un domaine (D), un élément de service (SE) étant associé à un domaine (D) et comprenant des données de qualité de service (QoS) et une référence (pte) vers une pluralité de labels de service (SL) ;
- pour chaque domaine (D) participant à ladite séquence (Sq) :
- sélectionner des labels de service (SL) correspondant aux éléments de service (SE) de ladite séquence (Sq), un label de service (SL) comprenant les données primaires suivantes (dat1) :
- un identifiant de label de service (ids) ;
- au moins un identifiant (ad_n) d'un noeud de bordure qui supporte le label de service ;
- au moins un identifiant (id_Ink) d'un lien d'adjacence entre ledit noeud de bordure et un noeud de bordure adjacent ;
- effectuer une corrélation entre chacun des labels de service (SLi) du domaine (Di) et les labels de service (SLi+1) d'au moins un domaine adjacent interconnecté (Di+1) en fonction des données primaires (dat1) des labels de service (SL) de sorte à obtenir une liste (LIST) de labels de service (SLi) ;
- sélectionner un label de service parmi ladite liste (LIST) ;
- à un niveau différent du niveau de service (SP), pour chaque domaine (D) participant à ladite séquence (Sq), sélectionner un identifiant de ressources correspondant (RL), ledit identifiant de ressources (RL) comprenant des données réseaux (dat3) relatives à des ressources réseaux de bordure inter-domaines (res) supportées par le noeud de bordure (b_no) qui supporte le label de service sélectionné (SL) ; et
- au niveau réseau (NP), pour chaque domaine (D) participant à ladite séquence (Sq), vérifier la disponibilité des ressources réseaux de bordure inter-domaines (res) définies dans l'identifiant de ressources sélectionné (RL) et réserver lesdites ressources réseaux de bordure inter-domaines (res) si elles sont disponibles.

2. Procédé de sélection de ressources selon la revendication 1, selon lequel un label de service (SL) comporte en outre les données secondaires suivantes (dat2):
- un type de technologie (tech_t) utilisée sur le noeud de bordure ;
- une clef de chiffrage (kid) ; et/ou
- une date de validité (ed) ; et/ou
- un indice de priorité (pf) ; et/ou
- un checksum (chk).

3. Procédé de sélection de ressources selon la revendication précédente, selon lequel l'étape de sélection des labels de service (SL) se fait en fonction d'au moins une donnée secondaire (dat2).

4. Procédé de sélection de ressources selon l'une des revendications précédentes 2 ou 3, selon lequel l'étape de corrélation se fait en fonction d'au moins une donnée secondaire (dat2).

5. Procédé de sélection de ressources selon l'une quelconque des revendications précédentes, selon lequel les données réseaux (dat3) d'un identifiant de ressources (RL) comprennent :
- Un label (G)MPLS ; ou
- Une classe Diffserv.

6. Procédé de sélection de ressources selon l'une quelconque des revendications précédentes, selon lequel l'étape de corrélation est effectuée de manière distribuée au niveau de chaque domaine (Di) participant à une séquence (Sq) d'éléments de service (SE).

7. Procédé de sélection de ressources selon la revendication précédente, selon lequel l'étape de corrélation comporte, au niveau de chaque domaine (Di) :
- recevoir un label de service (SLi+1) d'un domaine adjacent suivant (Di+1) ;
- identifier les noeuds de bordure de sortie (egᵢ) du domaine (Di) connectés aux noeuds de bordure d'entrée (inᵢ₊₁) du domaine adjacent suivant (Di+1) qui supportent ledit label de service (SLi+1);
- identifier les labels de service (SLi) supportés par les noeuds de bordure de sortie identifiés (egᵢ) ;
- identifier les noeuds de bordure d'entrée (inᵢ) du domaine (Di) pour lesquels un chemin (Pth) existe avec les noeuds de bordure de sortie identifiés (egᵢ) dudit domaine (Di) ;
- identifier les labels de service (SLi) supportés par les noeuds de bordure d'entrée identifiés (inᵢ) ;
- transmettre lesdits labels de service identifiés (SLi) au domaine adjacent précédent (Di-1).

8. Procédé de sélection de ressources selon l'une quelconque des revendications précédentes 1 à 5, selon lequel l'étape de corrélation est effectuée de manière centralisée au niveau d'une tierce partie (AI) qui connaît l'ensemble des éléments de service (SE) des différents domaines (D) du réseau de communication (ntw) et les interconnexions entre les domaines dudit réseau de communication (ntw).

9. Procédé de sélection de ressources selon la revendication précédente, selon lequel l'étape de corrélation s'effectue sur l'ensemble des domaines (D) participant à une séquence (Sq) d'éléments de service (SE) et entre chacun des labels de service (SLi) d'un noeud de bordure de sortie (egᵢ) d'un domaine (Di) et chacun des labels de service (SLi+1) d'un noeud d'entrée adjacent (inᵢ₊₁) d'au moins un domaine adjacent interconnecté (Di+1) auquel le noeud de bordure de sortie (egᵢ) est connecté.

10. Dispositif (DISP1) de sélection de ressources réseaux (res) de bordure inter-domaines d'un réseau de communication (ntw), un domaine (D) étant sous la responsabilité d'un opérateur unique et comprenant une pluralité de noeuds (no) dont au moins un noeud de bordure (b_no), les domaines étant divisés en au moins trois niveaux dont un niveau de service (SP), un niveau de supervision (MP) et un niveau réseau (NP), le dispositif étant adapté pour :
- au niveau de service (SP) :
- sélectionner au moins une séquence (Sq) d'éléments de service (SE), ladite séquence (Sq) satisfaisant une demande de service (S) d'un utilisateur d'un domaine (D), un élément de service (SE) étant associé à un domaine (D) et comprenant des données de qualité de service (QoS) et une référence (pte) vers une pluralité de labels de service (SL) ;
- pour chaque domaine (D) participant à ladite séquence (Sq) :
- sélectionner des labels de service (SL) correspondant aux éléments de service (SE) de ladite séquence (Sq), un label de service (SL) comprenant les données primaires suivantes (dat1) :
- un identifiant de label de service (ids) ;
- au moins un identifiant (ad_n) d'un noeud de bordure qui supporte le label de service ;
- au moins un identifiant (id_Ink) d'un lien d'adjacence entre ledit noeud de bordure et un noeud de bordure adjacent ;
- effectuer une corrélation entre chacun des labels de service (SLi) du domaine (Di) et les labels de service (SLi+1) d'au moins un domaine adjacent interconnecté (Di+1) en fonction des données primaires (dat1) des labels de service (SL) de sorte à obtenir une liste (LIST) de labels de service (SLi) ;
- sélectionner un label de service parmi ladite liste (LIST) ;
- à un niveau différent du niveau de service, pour chaque domaine (D) participant à ladite séquence (Sq), sélectionner un identifiant de ressources correspondant (RL), ledit identifiant de ressources (RL) comprenant des données réseaux (dat3) relatives à des ressources réseaux de bordure inter-domaines (res) supportées par le noeud de bordure (b_no) qui supporte le label de service sélectionné (SL) ; et
- au niveau réseau (NP), pour chaque domaine (D) participant à ladite séquence (Sq), vérifier la disponibilité des ressources réseaux de bordure inter-domaines (res) définies dans l'identifiant de ressources sélectionné (RL) et réserver lesdites ressources réseaux de bordure inter-domaines (res) si elles sont disponibles.

11. Dispositif (DISP1) de sélection de ressources selon la revendication précédente, **caractérisé en ce qu'**il est composé d'un élément de gestion (NME) d'un domaine (D).

12. Dispositif (DISP1) de sélection de ressources selon la revendication précédente, **caractérisé en ce qu'**il est composé d'un élément de gestion (NME) d'une tierce partie (AI) qui connaît l'ensemble des éléments de service (SE) des différents domaines (D) du réseau de communication (ntw) et les interconnexions entre les domaines dudit réseau de communication (ntw).

13. Réseau de communication (ntw) pour la sélection de ressources réseaux de bordure inter-domaines d'un réseau de communication (ntw), un domaine (D) étant sous la responsabilité d'un opérateur unique et comprenant une pluralité de noeuds (no) dont au moins un noeud de bordure (b_no), les domaines étant divisés en au moins trois niveaux dont un niveau de service (SP), un niveau de supervision (MP) et un niveau réseau (NP), ledit réseau de communication comprenant :
- une pluralité de domaines (D) ;
- et au moins un dispositif de sélection (DISP1) selon l'une quelconque des revendications précédentes 10 à 12.

14. Produit programme d'ordinateur (PG1) comportant une ou plusieurs séquences d'instructions exécutables par une unité de traitement d'information, l'exécution desdites séquences d'instructions permettant une mise en oeuvre du procédé selon l'une quelconque des revendications précédentes 1 à 9, lorsqu'il est chargé sur un ordinateur.

## Patentansprüche

1. Verfahren zur Auswahl von Interdomain-Netzwerkrandressourcen (res) eines Kommunikationsnetzwerks (ntw), wobei eine Domain (D) unter der Verantwortung eines selben Betreibers steht und eine Vielzahl von Knoten (no) umfasst, darunter mindestens ein Randknoten (b_no), wobei die Domains in mindestens drei Ebenen gegliedert sind, darunter eine Service-Ebene (SP), eine Überwachungsebene (MP) und eine Netzwerkebene (NP), wobei das Verfahren umfasst:
- Auf der Service-Ebene (SP):
- Auswählen mindestens einer Sequenz (Sq) von Service-Elementen (SE), wobei die besagte Sequenz (Sq) eine Service-Anforderung (S) eines Benutzers einer Domain (D) erfüllt, wobei ein Service-Element (SE) mit einer Domain (D) assoziiert ist und Dienstgütedaten (QoS) sowie einen Verweis (pte) auf eine Vielzahl von Service-Labels (SL) enthält;
- für jede an der besagten Sequenz (Sq) beteiligte Domain (D):
- Auswählen von Service-Labels (SL), welche den Service-Elementen (SE) der besagten Sequenz (Sq) entsprechen, wobei ein Service-Label (SL) die folgenden primären Daten (dat1) enthält:
- Eine Service-Label-Kennung (ids);
- mindestens eine Kennung (ad_n) eines Randknotens, welcher das Service-Label; unterstützt;
- mindestens eine Kennung (id_Ink) einer Nachbarschaftsverbindung zwischen dem besagten Randknoten und einem benachbarten Randknoten;
- Durchführen einer Korrelation zwischen einem jeden der Service-Labels (SLi) der Domain (Di) und den Service-Labels (SLi+1) mindestens einer zusammengeschalteten benachbarten Domain (Di+1) in Abhängigkeit von den primären Daten (dat1) der Service-Labels (SL), um eine Liste (LIST) von Service-Labels (SLi) zu erhalten;
- Auswählen eines Service-Labels in der besagten Liste (LIST);
- auf einer sich von der Service-Ebene (SP) unterscheidenden Ebene, für jede an der besagten Sequenz (Sq) beteiligte Domain (D), Auswählen einer entsprechenden Ressourcenkennung (RL), wobei die besagte Ressourcenkennung (RL) Netzwerkdaten (dat3) in Bezug auf von dem Randknoten (b_no), welcher das ausgewählte Service-Label (SL) unterstützt, unterstützte Interdomain-Netzwerkrandressourcen (res) enthält; und
- auf der Netzwerkebene (NP), für jede an der besagten Sequenz (Sq) beteiligte Domain (D), Überprüfen der Verfügbarkeit der in der ausgewählten Ressourcenkennung (RL) definierten Interdomain-Netzwerkrandressourcen (res), und Reservieren der besagten Interdomain-Netzwerkrandressourcen (res), wenn diese verfügbar sind.

2. Verfahren zur Auswahl von Ressourcen nach Anspruch 1, wobei ein Service-Label (SL) weiterhin die folgenden sekundären Daten (dat2) enthält:
- Die Art der Technologie (tech_t), welche auf dem Randknoten angewendet wird;
- einen Verschlüsselungscode (kid); und/oder
- ein Gültigkeitsdatum (ed); und/oder
- einen Prioritätsindex (pf); und/oder
- eine Prüfsumme (chk).

3. Verfahren zur Auswahl von Ressourcen nach dem vorstehenden Anspruch, wobei der Schritt des Auswählens der Service-Labels (SL) in Abhängigkeit von mindestens einem sekundären Datum (dat2) erfolgt.

4. Verfahren zur Auswahl von Ressourcen nach einem der vorstehenden Ansprüche 2 oder 3, wobei der Schritt des Korrelierens in Abhängigkeit von mindestens einem sekundären Datum (dat2) erfolgt.

5. Verfahren zur Auswahl von Ressourcen nach einem beliebigen der vorstehenden Ansprüche, wobei die Netzwerkdaten (dat3) einer Ressourcenkennung (RL) umfassen:
- Ein MPLS-Label (G); oder
- Eine DiffServ-Klasse.

6. Verfahren zur Auswahl von Ressourcen nach einem beliebigen der vorstehenden Ansprüche, wobei der Schritt des Korrelierens auf verteilte Weise auf Ebene einer jeden an einer Sequenz (Sq) von Service-Elementen (SE) beteiligten Domain (Di) erfolgt.

7. Verfahren zur Auswahl von Ressourcen nach dem vorstehenden Anspruch, wobei der Schritt des Korrelierens auf Ebene einer jeden Domain (Di) umfasst:
- Empfangen eines Service-Labels (SLi+1) einer nachfolgenden benachbarten Domain (Di+1);
- Identifizieren der Ausgangs-Randknoten (egᵢ) der Domain (Di), welche mit den Eingangs-Randknoten (inᵢ₊₁) der nachfolgenden benachbarten Domain (Di+1), die das besagte Service-Label (SLi+1) unterstützen, verbunden sind;
- Identifizieren der von den identifizierten Ausgangs-Randknoten (egᵢ) unterstützten Service-Labels (SLi);
- Identifizieren der Eingangs-Randknoten (inᵢ) der Domain (Di), für welche ein Pfad (Pth) mit den identifizierten Ausgangs-Randknoten (egᵢ) der besagten Domain (Di) besteht;
- Identifizieren der von den identifizierten Eingangs-Randknoten (inᵢ) unterstützten Service-Labels (SLi);
- Übertragen der besagten identifizierten Service-Labels (SLi) an die vorangehende benachbarte Domain (Di-1).

8. Verfahren zur Auswahl von Ressourcen nach einem beliebigen der vorstehenden Ansprüche 1 bis 5, wobei der Schritt des Korrelierens auf zentralisierte Weise auf Ebene einer Drittpartei (AI), welche alle Service-Elemente (SE) der verschiedenen Domains (D) des Kommunikationsnetzwerks (ntw) und die Zwischenverbindungen zwischen den Domains des besagten Kommunikationsnetzwerks (ntw) kennt, erfolgt.

9. Verfahren zur Auswahl von Ressourcen nach dem vorstehenden Anspruch, wobei der Schritt des Korrelierens auf allen an einer Sequenz (Sq) von Service-Elementen (SE) beteiligten Domains (D) und zwischen einem jeden der Service-Labels (SLi) eines Ausgangs-Randknotens (egᵢ) einer Domain (Di) und einem jeden der Service-Labels (SLi+1) eines benachbarten Eingangsknotens (inᵢ₊₁) mindestens einer zusammengeschalteten benachbarten Domain (Di+1), mit welchem der Ausgangs-Randknoten (egᵢ) verbunden ist, erfolgt.

10. Vorrichtung (DISP1) zur Auswahl von Interdomain-Netzwerkrandressourcen (res) eines Kommunikationsnetzwerks (ntw), wobei eine Domain (D) unter der Verantwortung eines selben Betreibers steht und eine Vielzahl von Knoten (no) umfasst, darunter mindestens ein Randknoten (b_no), wobei die Domains in mindestens drei Ebenen gegliedert sind, darunter eine Service-Ebene (SP), eine Überwachungsebene (MP) und eine Netzwerkebene (NP), wobei die Vorrichtung für das Durchführen der folgenden Schritte ausgelegt ist:
- Auf der Service-Ebene (SP):
- Auswählen mindestens einer Sequenz (Sq) von Service-Elementen (SE), wobei die besagte Sequenz (Sq) eine Service-Anforderung (S) eines Benutzers einer Domain (D) erfüllt, wobei ein Service-Element (SE) mit einer Domain (D) assoziiert ist und Dienstgütedaten (QoS) sowie einen Verweis (pte) auf eine Vielzahl von Service-Labels (SL) enthält;
- für jede an der besagten Sequenz (Sq) beteiligte Domain (D):
- Auswählen von Service-Labels (SL), welche den Service-Elementen (SE) der besagten Sequenz (Sq) entsprechen, wobei ein Service-Label (SL) die folgenden primären Daten (dat1) enthält:
- Eine Service-Label-Kennung (ids);
- mindestens eine Kennung (ad_n) eines Randknotens, welcher das Service-Label; unterstützt;
- mindestens eine Kennung (id_Ink) einer Nachbarschaftsverbindung zwischen dem besagten Randknoten und einem benachbarten Randknoten;
- Durchführen einer Korrelation zwischen einem jeden der Service-Labels (SLi) der Domain (Di) und den Service-Labels (SLi+1) mindestens einer zusammengeschalteten benachbarten Domain (Di+1) in Abhängigkeit von den primären Daten (dat1) der Service-Labels (SL), um eine Liste (LIST) von Service-Labels (SLi) zu erhalten;
- Auswählen eines Service-Labels in der besagten Liste (LIST);
- auf einer sich von der Service-Ebene (SP) unterscheidenden Ebene, für jede an der besagten Sequenz (Sq) beteiligte Domain (D), Auswählen einer entsprechenden Ressourcenkennung (RL), wobei die besagte Ressourcenkennung (RL) Netzwerkdaten (dat3) in Bezug auf von dem Randknoten (b_no), welcher das ausgewählte Service-Label (SL) unterstützt, unterstützte Interdomain-Netzwerkrandressourcen (res) enthält; und
- auf der Netzwerkebene (NP), für jede an der besagten Sequenz (Sq) beteiligte Domain (D), Überprüfen der Verfügbarkeit der in der ausgewählten Ressourcenkennung (RL) definierten Interdomain-Netzwerkrandressourcen (res), und Reservieren der besagten Interdomain-Netzwerkrandressourcen (res), wenn diese verfügbar sind.

11. Vorrichtung (DISP1) zur Auswahl von Ressourcen nach dem vorstehenden Anspruch, **dadurch gekennzeichnet, dass** sie aus einem Verwaltungselement (NME) einer Domain (D) besteht.

12. Vorrichtung (DISP1) zur Auswahl von Ressourcen nach dem vorstehenden Anspruch, **dadurch gekennzeichnet, dass** sie aus einem Verwaltungselement (NME) einer dritten Partei (AI), welche alle Service-Elemente (SE) der verschiedenen Domains (D) des Kommunikationsnetzwerks (ntw) und die Zwischenverbindungen zwischen den Domains des besagten Kommunikationsnetzwerks (ntw) kennt, besteht.

13. Kommunikationsnetzwerk (ntw) zur Auswahl von Interdomain-Netzwerkrandressourcen eines Kommunikationsnetzwerks (ntw), wobei eine Domain (D) unter der Verantwortung eines selben Betreibers steht und eine Vielzahl von Knoten (no) umfasst, darunter mindestens ein Randknoten (b_no), wobei die Domains in mindestens drei Ebenen gegliedert sind, darunter eine Service-Ebene (SP), eine Überwachungsebene (MP) und eine Netzwerkebene (NP), wobei das Kommunikationsnetzwerk umfasst:
- Eine Vielzahl von Domains (D);
- und mindestens eine Auswahlvorrichtung (DISP1) gemäß einem beliebigen der vorstehenden Ansprüche 10 bis 12.

14. Computerprogramm-Produkt (PG1) mit einer oder mehreren Befehlssequenzen, welche durch eine Informationsverarbeitungseinheit ausführbar sind, wobei das Ausführen der besagten Befehlssequenzen die Durchführung des Verfahrens gemäß einem beliebigen der vorstehenden Ansprüche 1 bis 9 ermöglicht, wenn es auf einem Computer geladen ist.

## Claims

1. A method for selecting inter-domain edge node network resources (res) of a communication network (ntw), a domain (D) being the responsibility of a single operator and comprising a plurality of nodes (no) including at least one edge node (b_no), the domains being divided into at least three planes including a service plane (SP), a monitoring plane (MP) and a network plane (NP), which method comprises:
- in the service plane (SP):
- selecting at least one sequence (Sq) of service elements (SE), said sequence (Sq) satisfying a service request (S) of a user of a domain (D), a service element (SE) being associated with a domain (D) and comprises quality of service data (QoS) and a reference (pte) to a plurality of service labels (SL);
- for each domain (D) participating in said sequence (Sq):
- selecting service labels (SL) corresponding to the service elements (SE) of said sequence (Sq), a service label (SL) comprising the following primary data (dat1):
- a service label identifier (ids);
- at least one identifier (ad_n) of an edge node that supports the service label;
- at least one identifier (id_Ink) of a link of adjacency between said edge node and an adjacent edge node;
- making a correlation between each of the service labels (SLi) of the domain (Di) and the service labels (SLi+1) of at least one adjacent interconnected domain (Di+1) based on the primary data (dat1) of the service data (SL) so as to obtain a list (LIST) of service labels (SLi);
- selecting a service label from said list (LIST);
- in a plane different from the service plane (SP), for each domain (D) participating in said sequence (Sq), selecting a corresponding resource identifier (RL), said resource identifier (RL) comprising network data (dat3) related to inter-domain edge network resources (res) supported by the edge node (b_no) that supports the selected service label (SL); and
- in the network plane (NP), for each domain (D) participating in said sequence (Sq), checking the availability of the inter-domain edge network resources (res) defined in the selected resource identifier (RL) and reserving said inter-domain edge network resources (res) if they are available.

2. A method for selecting resources according to claim 1, wherein a service label (SL) further comprises the following secondary data (dat2):
- a type of technology (tech_t) used on the edge node;
- an encryption key (kid); and/or a validity date (ed); and/or
- a priority index (pf); and/or
- a checksum (chk).

3. A method for selecting resources according to the preceding claim, wherein the step of selecting the service labels (SL) is done based on a piece of secondary data (dat2).

4. A method for selecting resources according to one of the preceding claims 2 or 3, wherein the step of correlation is based on at least one piece of secondary data (dat2).

5. A method for selecting resources according to any one of the preceding claims, wherein the network data (dat3) of a resource identifier (RL) comprises:
- A (G)MPLS label; or
- A Diffserv class.

6. A method for selecting resources according to any one of the preceding claims, wherein the step of correlation is performed in a distributed manner within each domain (Di) participating in a sequence (Sq) of service elements (SE).

7. A method for selecting resources according to the preceding claim, wherein the step of correlation comprises, within each domain (Di):
- receiving a service label (SLi+1) of a following adjacent domain (Di+1);
- identifying the exit edge nodes (egᵢ) of the domain (Di) connected to the entry edge nodes (inkl) of the following adjacent domain (Di+1) that support said service label (SLi+1);
- identifying the service labels (SLi) supported by the identified exit edge nodes (egᵢ);
- identifying the entry edge nodes (inᵢ) of the domain (Di) for which a path (Pth) exists with the identified exit edge nodes (egᵢ) of said domain (Di);
- identifying the service labels (SLi) supported by the identified entry edge nodes (in,);
- transmitting said identified service labels (SLi) to the preceding adjacent domain (Di-1).

8. A method for selecting resources according to any one of the preceding claims 1 to 5, wherein the step of correlation is performed in a centralized manner within a third party (AI) that knows all of the service elements (SE) of the various domains (D) of the communication network (ntw) and the interconnections between the domains of said communication network (ntw).

9. A method for selecting resources according to the preceding claim, wherein the step of correlation is performed in the set of domains (D) participating in a sequence (Sq) of service elements (SE) and between each of the service labels (SLi) of an exit edge node (egi) of domain (Di) and each of the service labels (SLi+1) of the adjacent entry node (ini+1) of at least one interconnected adjacent domain (Di+1) to which the exit edge node (egᵢ) is connected.

10. A device (DISP1) for selecting inter-domain edge node network resources (res) of a communication network (ntw), a domain (D) being the responsibility of a single operator and comprising a plurality of nodes (no) including at least one edge node (b_no), the domains being divided into at least three planes including a service plane (SP), a monitoring plane (MP) and a network plane (NP), which device is adapted for:
- in the service plane (SP):
- selecting at least one sequence (Sq) of service elements (SE), said sequence (Sq) satisfying a service request (S) of a user of a domain (D), a service element (SE) being associated with a domain (D) and comprises quality of service data (QoS) and a reference (pte) to a plurality of service labels (SL);
- for each domain (D) participating in said sequence (Sq):
- selecting service labels (SL) corresponding to the service elements (SE) of said sequence (Sq), a service label (SL) comprising the following primary data (dat1):
- a service label identifier (ids);
- at least one identifier (ad_n) of an edge node that supports the service label;
- at least one identifier (id_Ink) of a link of adjacency between said edge node and an adjacent edge node;
- making a correlation between each of the service labels (SLi) of the domain (Di) and the service labels (SLi+1) of at least one adjacent interconnected domain (Di+1) based on the primary data (dat1) of the service data (SL) so as to obtain a list (LIST) of service labels (SLi);
- selecting a service label from said list (LIST);
- in a plane different from the service plane, for each domain (D) participating in said sequence (Sq), selecting a corresponding resource identifier (RL), said resource identifier (RL) comprising network data (dat3) related to inter-domain edge network resources (res) supported by the edge node (b_no) that supports the selected service label (SL); and
- in the network plane (NP), for each domain (D) participating in said sequence (Sq), checking the availability of the inter-domain edge network resources (res) defined in the selected resource identifier (RL) and reserving said inter-domain edge network resources (res) if they are available.

11. A device (DISP1) for selecting resources according to the preceding claim, **characterized in that** it is made up of a management element (NME) of a domain (D).

12. A device (DISP1) for selecting resources according to the preceding claim, **characterized in that** it is made up of a management element (NME) of a third party (AI) that knows all of the service elements (SE) of the various domains (D) of the communication network (ntw) and the interconnections between the domains of said communication network (ntw).

13. A communication network (ntw) for selecting inter-domain edge network resources of a communication network (ntw), a domain (D) being the responsibility of a single operator and comprising a plurality of nodes (no) including at least one edge node (b_no), the domains being divided into at least three planes including a service plane (SP), a monitoring plane (MP) and a network plane (NP), which communication network comprises:
- a plurality of domains (D);
- and at least one selection device (DISP1) according to any one of the preceding claims 10 to 12.

14. A computer program product (PG1) comprising one or more sequences of instructions that can be executed by an information processing unit, the execution of said sequences of instructions that make it possible to implement the method according to any one of the preceding claims 1 to 9, whenever it is load onto a computer.
